# EUROPEAN PATENT SPECIFICATION

(11) **EP 4 498 191 B1**
(45) Date of publication and mention of the grant of the patent: **29.04.2026**
(21) Application number: 22964337.4
(22) Date of filing: 31.10.2022
(51) Int. Cl.: G05B 19/4069, G05B 19/4061, B23Q 15/00

(54) **MACHINING SIMULATION DEVICE, MACHINE TOOL, MACHINE TOOL SYSTEM, MACHINING SIMULATION METHOD, AND PROGRAM**
BEARBEITUNGSSIMULATIONSVORRICHTUNG, WERKZEUGMASCHINE, WERKZEUGMASCHINENSYSTEM, BEARBEITUNGSSIMULATIONSVERFAHREN UND PROGRAMM
DISPOSITIF DE SIMULATION D'USINAGE, MACHINE-OUTIL, SYSTÈME DE MACHINE-OUTIL, PROCÉDÉ DE SIMULATION D'USINAGE ET PROGRAMME

(43) Date of publication of application: 29.01.2025
(73) Proprietor: Yamazaki Mazak Corporation, Niwa-gun, Aichi 480-0197 (JP)
(72) Inventor: OSHIMA, Yuji, Niwa-gun, Aichi 480-0197 (JP); SHIOI, Yu, Niwa-gun, Aichi 480-0197 (JP); YAMAMOTO, Mikihito, Niwa-gun, Aichi 480-0197 (JP); KOIKE, Shunsuke, Niwa-gun, Aichi 480-0197 (JP); KATAYAMA, Takuro, Niwa-gun, Aichi 480-0197 (JP); SUMIDA, Yasuharu, Niwa-gun, Aichi 480-0197 (JP)
(74) Representative: TBK
(86) International application number: PCT/JP2022/040672
(87) International publication number: WO 2024/095314

(56) References cited:
- EP-A1- 3 933 525
- WO-A1-2010/116265
- JP-A- 2007 018 145
- JP-A- 2007 048 014
- JP-A- 2012 218 111
- JP-A- 2012 218 111
- JP-A- 2020 161 069
- JP-A- S58 163 001
- US-A1- 2020 306 910
- US-A1- 2021 291 309

## Description

### Technical Field

The present invention relates to a machining simulation apparatus, a machine tool, a machine tool system, a machining simulation method, and a program.

### Background Art

A technique for virtually executing a machining program using a three-dimensional model of a machine to check mechanical interference is known.

As a related technique, WO 2010/073296 A1 discloses a simulation method for an NC machine tool. In the simulation method recited in WO 2010/073296 A1, each of three component parts including a holder, a shank, and a chip is defined with CAD data or in a modeling language. In addition, the three component parts are used in combination in a three-dimensional space, and such three component parts used in combination are regarded as one tool. Further, interference between such a tool and a workpiece is checked.

Furthermore, EP 3 933 525 A1 discloses a method for operating a machine tool with a numerical control and a plurality of position-controlled axes for moving a tool relative to a workpiece, wherein tool data for determining a tool model, workpiece data for determining a workpiece model, and machine data for determining a machine model are used to simulate the movements of the tool relative to the workpiece, taking into account the tool model, the workpiece model and the machine model, in order to detect collisions. Still further, according to JP 2012 218111 A, in order to determine a tool and a tool holder so as to have a tool mounting length as short as possible within a range having no interference, the selection of a tool mounting length and a holder is instructed by using data regarding a tool shape, data regarding a holder mounting length, data regarding the shape of a machine structure, data regarding a workpiece, and data a regarding tool shape. Then, a simulation of a working program is executed.

### Summary of Invention

### Technical Problem

It is an object of the present invention to provide a machining simulation apparatus, a machine tool, a machine tool system, a machining simulation method, and a program, which are capable of making an interference check with high accuracy.

### Solution to Problem

According to the invention, this object is achieved by a machining simulation apparatus according to claim 1, a machine tool system according to claim 8, a machining simulation method according to claim 9, and a program according claim 10. Further features and advantageous modifications are shown in the dependent claims.

A machining simulation apparatus in some embodiments includes: a memory configured to store a plurality of constituent models obtained by respectively modeling at least some of elements that constitute a machine tool, a plurality of holding unit models obtained by respectively modeling a plurality of tool holding units, a workpiece model obtained by modeling a workpiece before machining, and a machining program; and a processor configured to set a specific tool model obtained by modeling a tool, based on tool information, select a specific holding unit model from among the plurality of holding unit models stored in the memory, based on the tool information, derive a recommendation value of a protrusion length of the specific tool model with respect to the specific holding unit model, using a preset calculation formula for calculating the recommendation value of the protrusion length, based on the tool type TT and tool feature data TC included in the tool information the tool information, create an assembly model in which the specific tool model and the specific holding unit model are used in combination for the protrusion length to be either the recommendation value or a compensation value that has been compensated from the recommendation value, virtually execute the machining program by using the plurality of constituent models, the workpiece model, and the assembly model, and check whether the assembly model abnormally interferes with any of the plurality of constituent models or the workpiece model, the apparatus further comprising a display device, wherein the processor executes a display program stored in the memory to display, on the display device, the recommendation value of the protrusion length that has been derived, based on the tool information, in a format that is editable by an operator, and an image indicating a shape of the assembly model, and in response to a change of the protrusion length from the recommendation value to the compensation value, the processor automatically changes the shape of the assembly model displayed on the display device.

A machine tool in some embodiments includes: the above machining simulation apparatus; a support configured to support the tool via a tool holding unit; a movement device configured to move the support; a workpiece holding device configured to hold the workpiece: a second processor; a second display device; and a second memory configured to store a second display program. The second processor executes the second display program to display, on the second display device, an instruction image that has been created, based on the data that has been acquired by the data acquisition unit. The instruction image includes: either the recommendation value of the protrusion length of the specific tool model with respect to the specific holding unit model or the compensation value that has been compensated from the recommendation value; and an image indicating a shape of the assembly model.

A machining simulation method in some embodiments includes steps of: setting a specific tool model obtained by modeling a tool, based on tool information that has been input into either a machining simulation apparatus or a machine tool; selecting a specific holding unit model from among a plurality of holding unit models stored in a memory and obtained by respectively modeling a plurality of tool holding units, based on the tool information; deriving a recommendation value of a protrusion length of the specific tool model with respect to the specific holding unit model, using a preset calculation formula for calculating the recommendation value of the protrusion length, based on the tool type TT and tool feature data TC included in the tool information; creating an assembly model in which the specific tool model and the specific holding unit model are used in combination for the protrusion length to be either the recommendation value or a compensation value that has been compensated from the recommendation value; virtually executing a machining program to perform a machining simulation for virtually machining a workpiece model, by using a plurality of constituent models obtained by respectively modeling at least some of elements that constitute the machine tool, the workpiece model obtained by modeling a workpiece before machining, and the assembly model; and checking, in the machining simulation, whether the assembly model abnormally interferences with any of the plurality of constituent models or the workpiece model, executing a display program stored in the memory to display, on a display device, the recommendation value of the protrusion length that has been derived, based on the tool information, in a format that is editable by an operator, and an image indicating a shape of the assembly model, and in response to a change of the protrusion length from the recommendation value to the compensation value, automatically changing the shape of the assembly model displayed on the display device.

A program in some embodiments is a program for causing either the machining simulation apparatus or the machine tool to perform the above-described simulation method.

### Effects of Invention

The present invention provides a machining simulation apparatus, a machine tool, a machine tool system, a machining simulation method, and a program, which are capable of making an interference check with high accuracy.

### Brief Description of Drawings

[FIG 1] FIG 1 is a block diagram of a hardware configuration of a machining simulation apparatus in a first embodiment, illustrating an example of the hardware configuration.
[FIG 2] FIG 2 is a schematic perspective view of a machine tool in the first embodiment, schematically illustrating the machine tool.
[FIG 3] FIG 3 is a schematic illustration of a situation in which a machine tool model is displayed on a display device.
[FIG 4] FIG 4 is a diagram for describing a tool length and a protrusion length of a tool with respect to a tool holding unit.
[FIG 5] FIG 5 is a diagram for describing a model tool length and a protrusion length of a tool model with respect to a holding unit model.
[FIG 6] FIG 6 is a schematic illustration of a situation in which a processor derives a specific tool model, a specific holding unit model, and a recommendation value of the protrusion length, based on tool information.
[FIG 7] FIG 7 is a schematic side view of the specific tool model, illustrating an example of the specific tool model.
[FIG. 8] FIG. 8 is a schematic side view of the specific holding unit model, illustrating an example of the specific holding unit model.
[FIG. 9] FIG. 9 is a schematic illustration of a situation in which association data which associates the tool information with the recommendation value of the protrusion length is stored in a memory.
[FIG. 10] FIG. 10 is a diagram of association data which associates the tool information with the recommendation value of the protrusion length, illustrating an example of the association data.
[FIG. 11] FIG. 11 is a diagram for describing a cutting edge angle, a cutting blade length, an inscribed circle diameter, a head portion length, and an additional length.
[FIG. 12] FIG. 12 is a diagram of the association data which associates the tool information with the recommendation value of the protrusion length, illustrating another example of the association data.
[FIG. 13] FIG. 13 is a diagram of a calculation formula for calculating the recommendation value of the protrusion length, illustrating an example of the calculation formula.
[FIG. 14] FIG. 14 is a schematic side view of an assembly model, illustrating an example of the assembly model.
[FIG. 15] FIG. 15 is a schematic illustration of a situation in which the recommendation value of the protrusion length is displayed in a format to be editable by an operator.
[FIG. 16] FIG. 16 is a schematic illustration of a situation after the recommendation value of the protrusion length has been compensated to a compensation value.
[FIG. 17] FIG. 17 is a schematic illustration of a situation in which a machining simulation is being performed.
[FIG. 18] FIG. 18 is a functional block diagram of the machining simulation apparatus in the first embodiment, schematically illustrating the machining simulation apparatus.
[FIG. 19] FIG. 19 is a schematic illustration of a situation in which tool information is input into the machining simulation apparatus.
[FIG. 20] FIG. 20 is a schematic illustration of a situation in which an image for receiving input of the tool information is displayed on the display device.
[FIG. 21] FIG. 21 is a schematic illustration of a situation in which the recommendation value of the protrusion length and the like are displayed on the display device.
[FIG. 22] FIG. 22 is a schematic illustration of a situation in which the recommendation value of the protrusion length and the like are displayed on the display device.
[FIG. 23] FIG. 23 is a schematic illustration of a situation in which a plurality of candidates that can be the specific holding unit model are displayed on the display device.
[FIG. 24] FIG. 24 is a schematic illustration of a situation in which the image for receiving input of the tool information is displayed on the display device.
[FIG. 25] FIG. 25 is a schematic illustration of a situation in which the recommendation value of the protrusion length and the like are displayed on the display device.
[FIG. 26] FIG. 26 is a diagram for describing a grooving depth corresponding length.
[FIG. 27] FIG. 27 is a schematic illustration of a situation in which the image for receiving input of the tool information is displayed on the display device.
[FIG. 28] FIG. 28 is a schematic illustration of a situation in which the recommendation value of the protrusion length and the like are displayed on the display device.
[FIG. 29] FIG. 29 is a schematic illustration of a situation in which an interference check region is set, based on the specific tool model, the specific holding unit model, and the recommendation value of the protrusion length.
[FIG. 30] FIG. 30 is a schematic illustration of the situation in which the interference check region is set, based on the specific tool model, the specific holding unit model, and the compensation value of the protrusion length.
[FIG. 31] FIG. 31 is a schematic illustration of a situation in which presence or absence of abnormal interference is checked.
[FIG. 32] FIG. 32 is a schematic illustration of a situation in which a first image including an image for receiving input or selection of a tool type is displayed on the display device.
[FIG. 33] FIG. 33 is a schematic illustration of a situation in which a second image including an image for receiving input of tool feature data is displayed on the display device.
[FIG. 34] FIG. 34 is a schematic illustration of a situation in which the recommendation value of the protrusion length and the like are displayed on the display device.
[FIG. 35] FIG. 35 is a schematic illustration of a situation after the recommendation value of the protrusion length has been compensated to the compensation value.
[FIG. 36] FIG. 36 is a schematic illustration of a situation in which after the second image is closed, a third image is displayed on the display device.
[FIG. 37] FIG. 37 is a block diagram of a hardware configuration of a control unit of the machine tool, illustrating an example of the hardware configuration.
[FIG. 38] FIG. 38 is a schematic illustration of a situation in which an instruction image is displayed on a second display device.
[FIG. 39] FIG. 39 is a schematic illustration of a machine tool system in the first embodiment.
[FIG. 40] FIG. 40 is a schematic illustration of a machine tool system in a modification of the first embodiment.
[FIG. 41] FIG. 41 is a flowchart of a machining simulation method in the first embodiment, illustrating an example of the machining simulation method.
[FIG. 42] FIG. 42 is a schematic illustration of an example of a non-volatile storage medium in which a program is recorded.

### Description of Embodiments

Hereinafter, a machining simulation apparatus 1A, a machine tool system 100, a machining simulation method, and a program (more specifically, an arithmetic program 59) in embodiments will be described with reference to the drawings. It is to be noted that in the description of the following embodiments, portions and members having the same function are denoted by the same reference signs, and repeated description for the same reference signs will be omitted for the portions and members to which the same reference signs are attached.

### (First Embodiment)

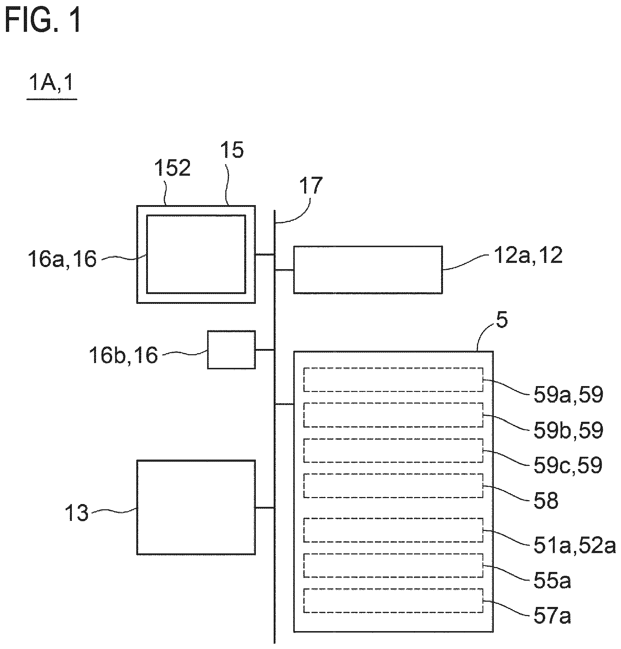

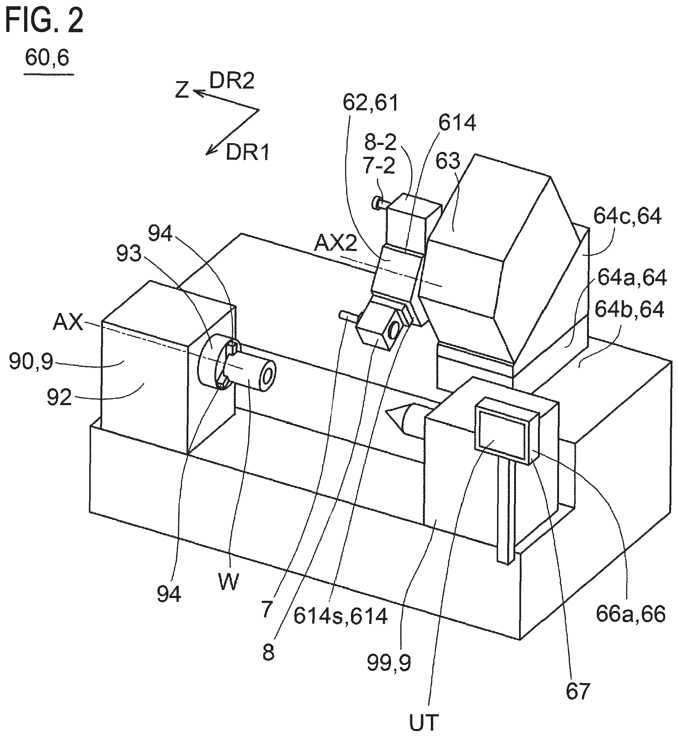

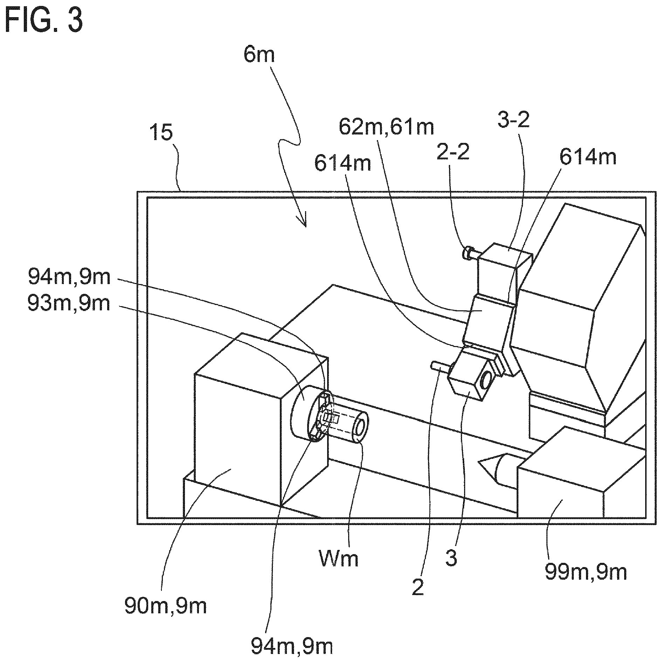

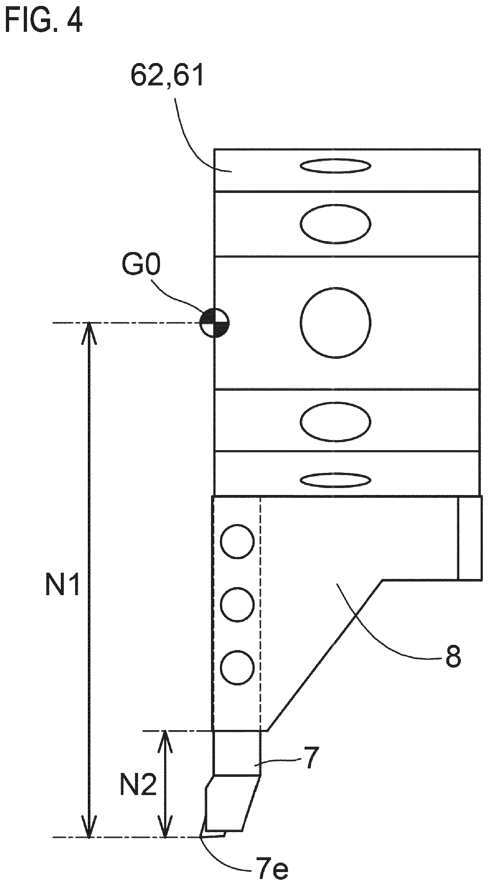

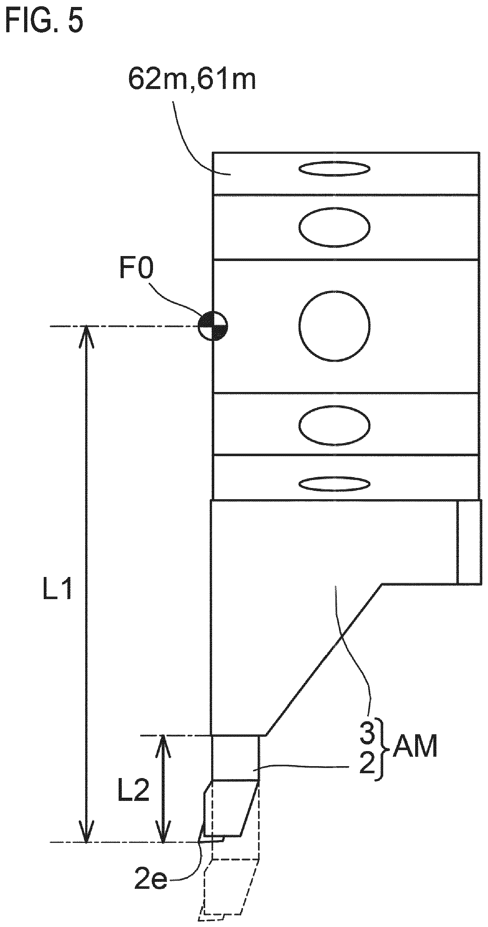

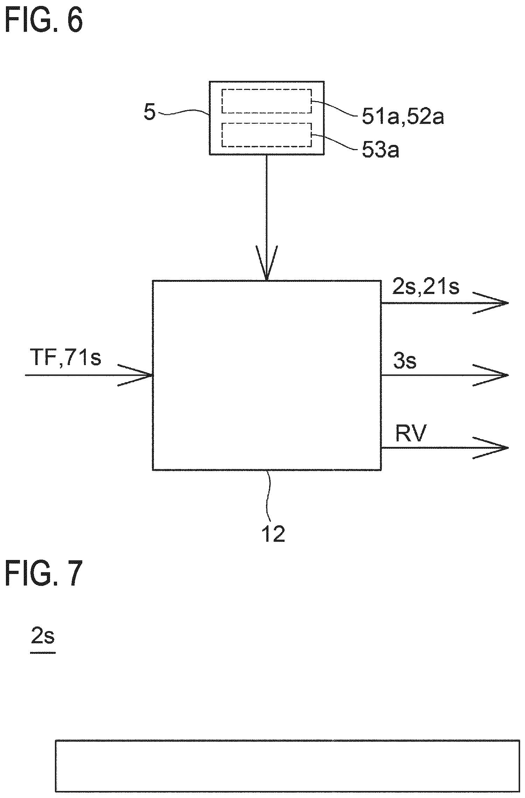

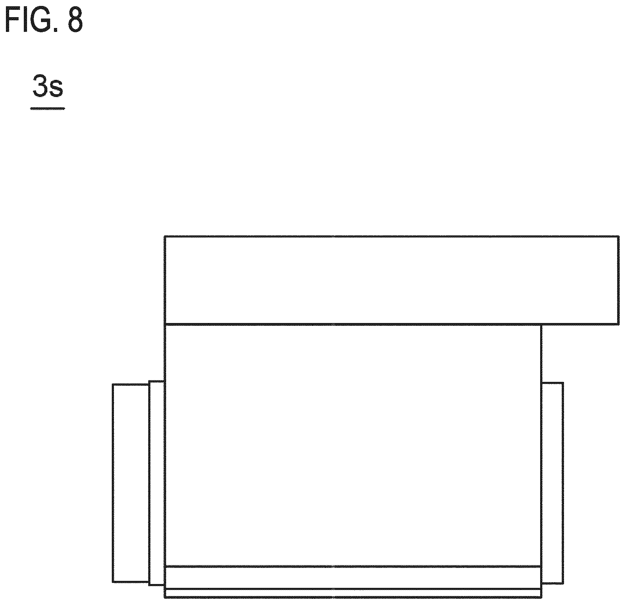

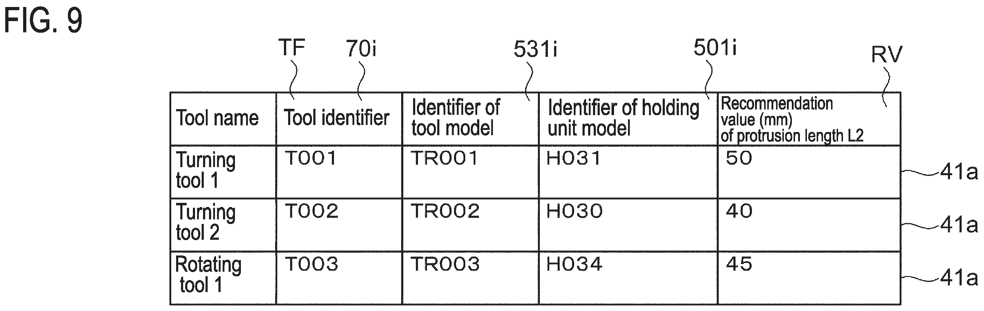

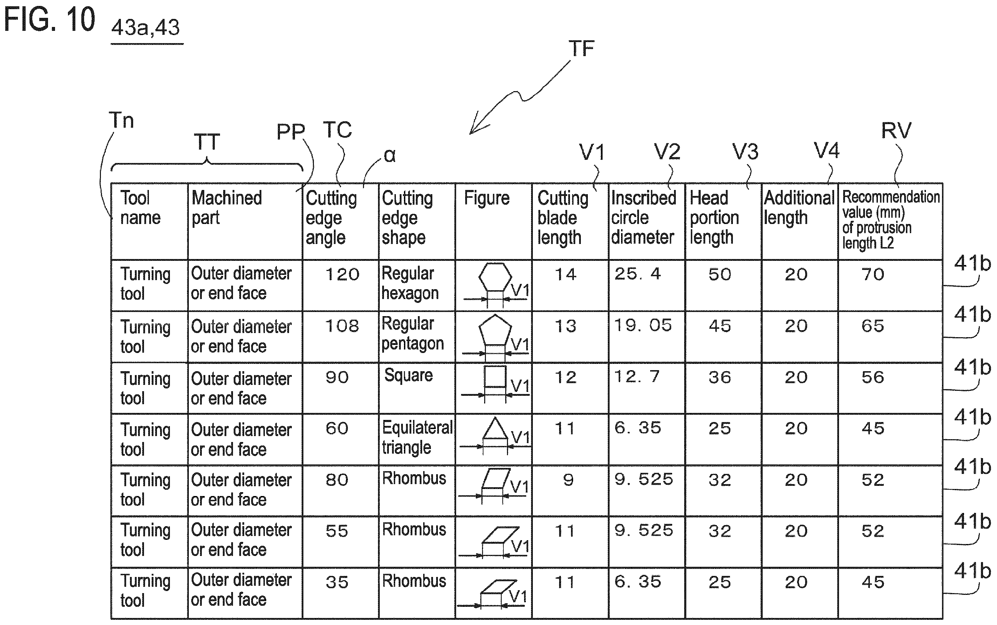

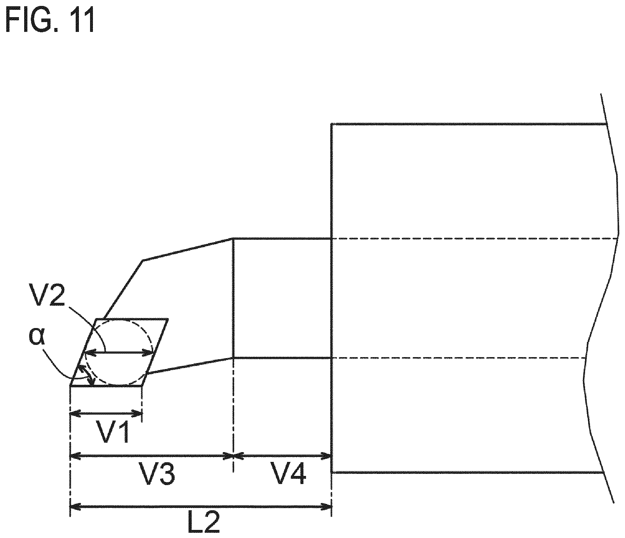

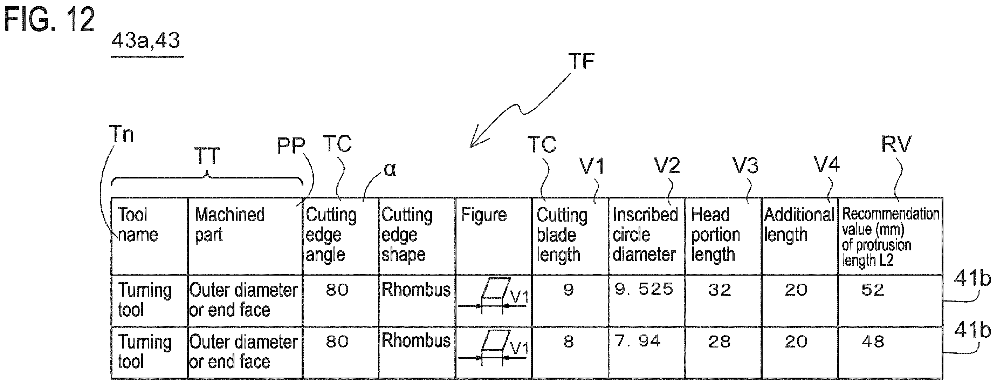

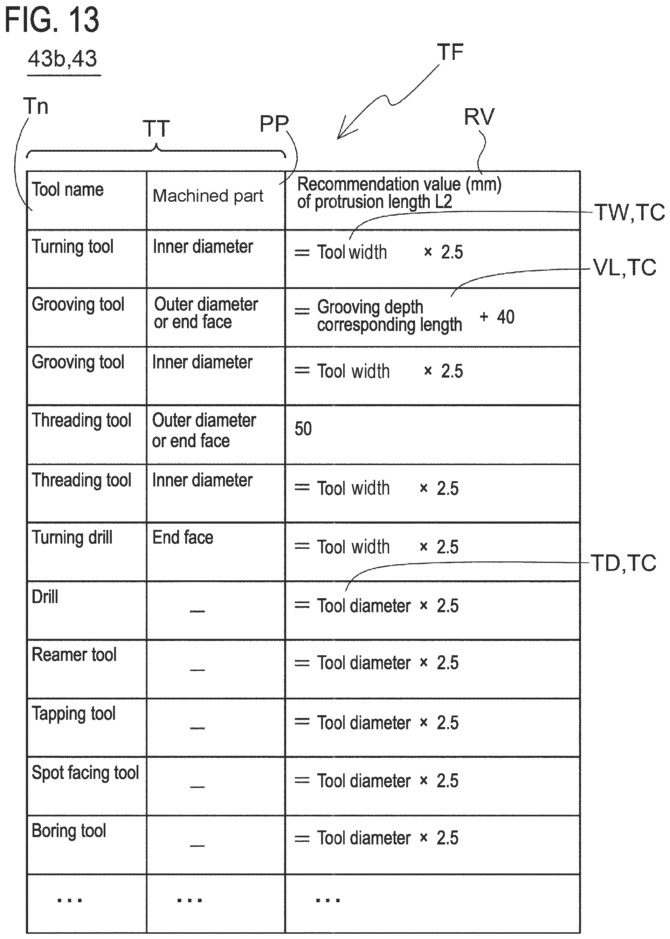

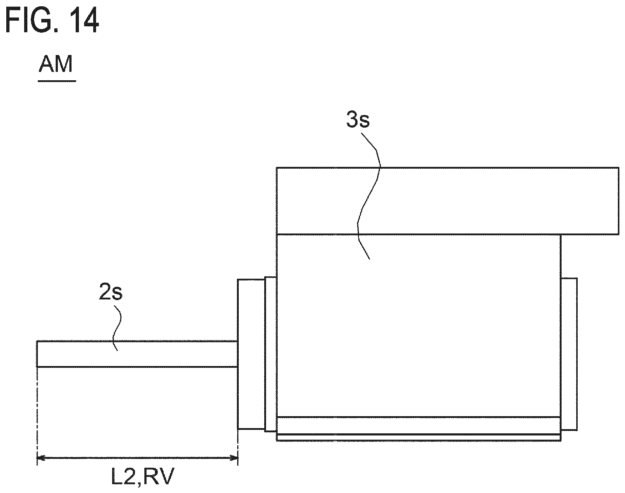

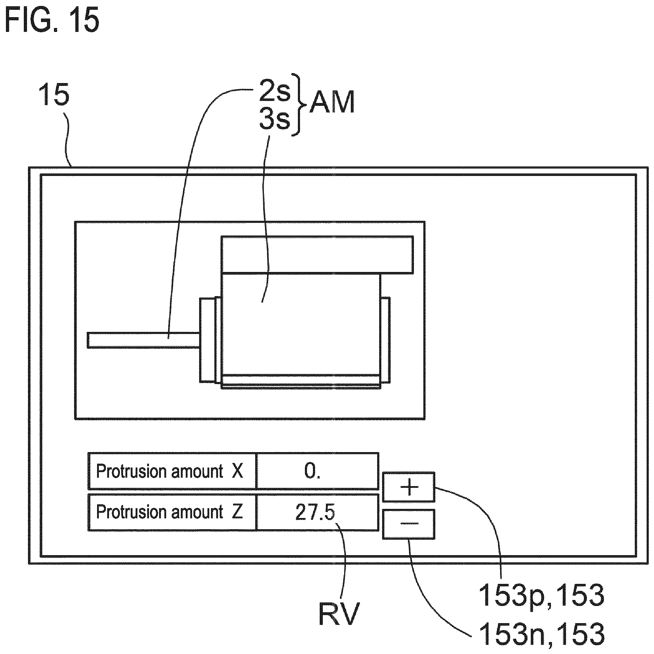

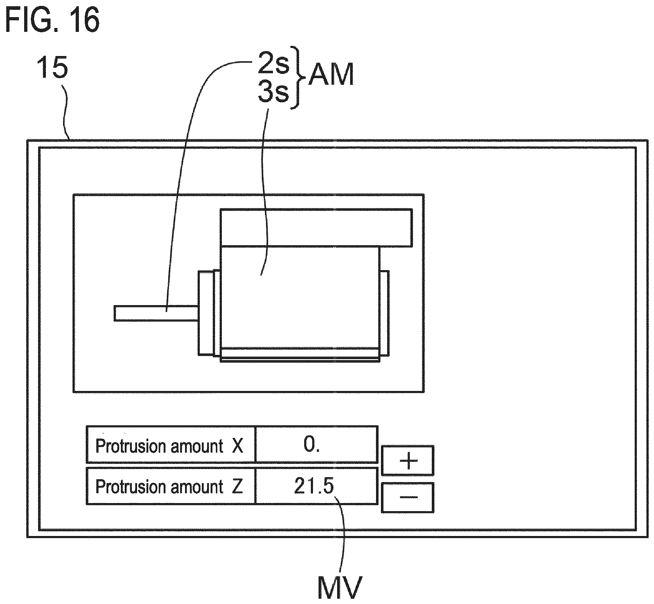

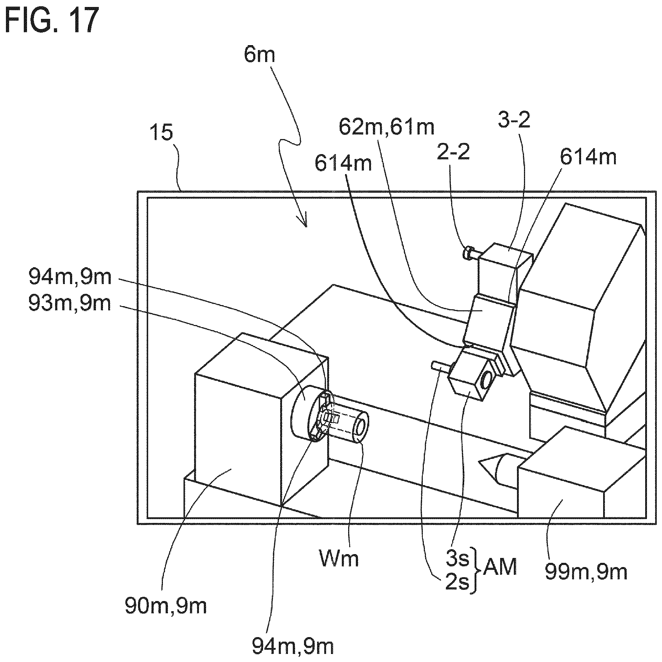

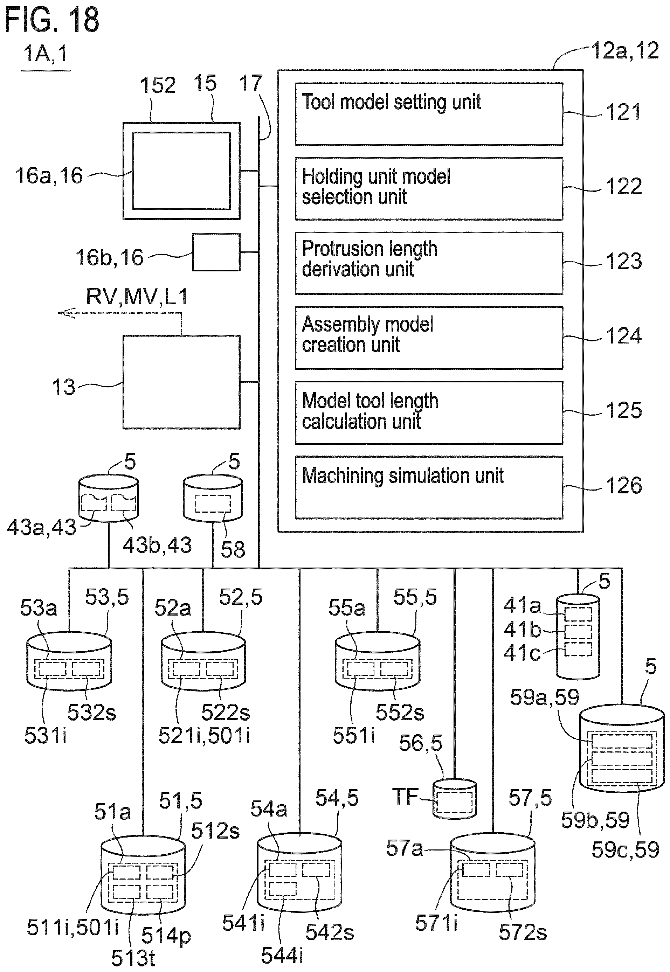

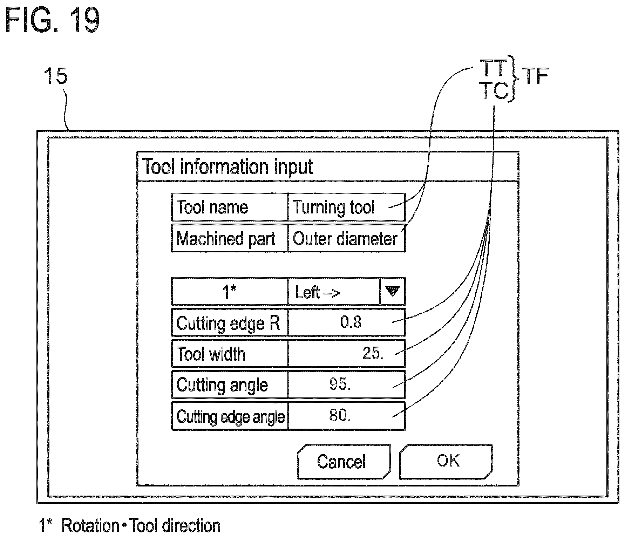

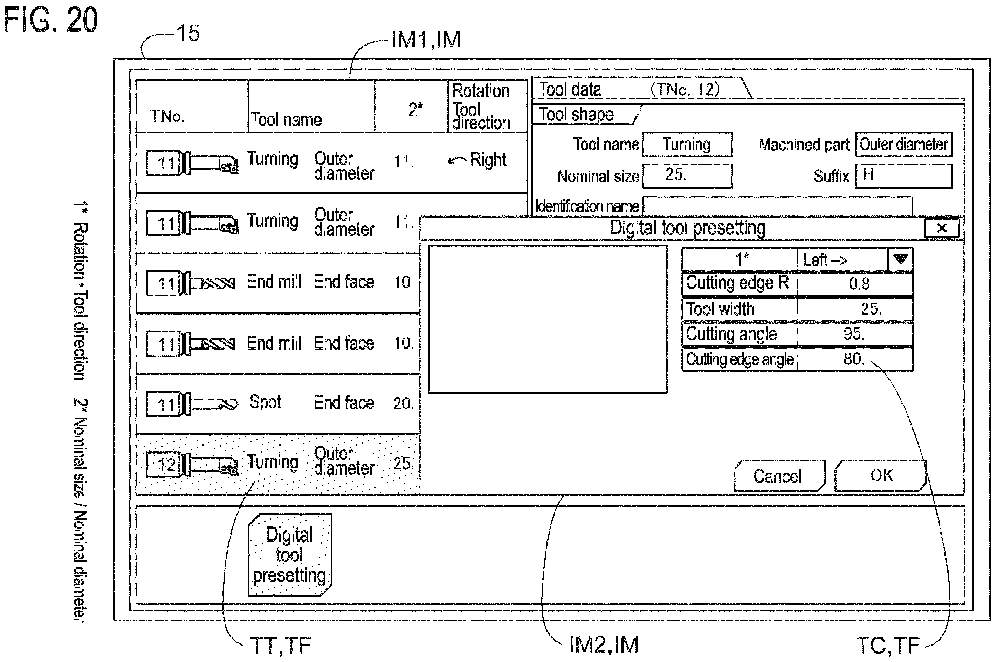

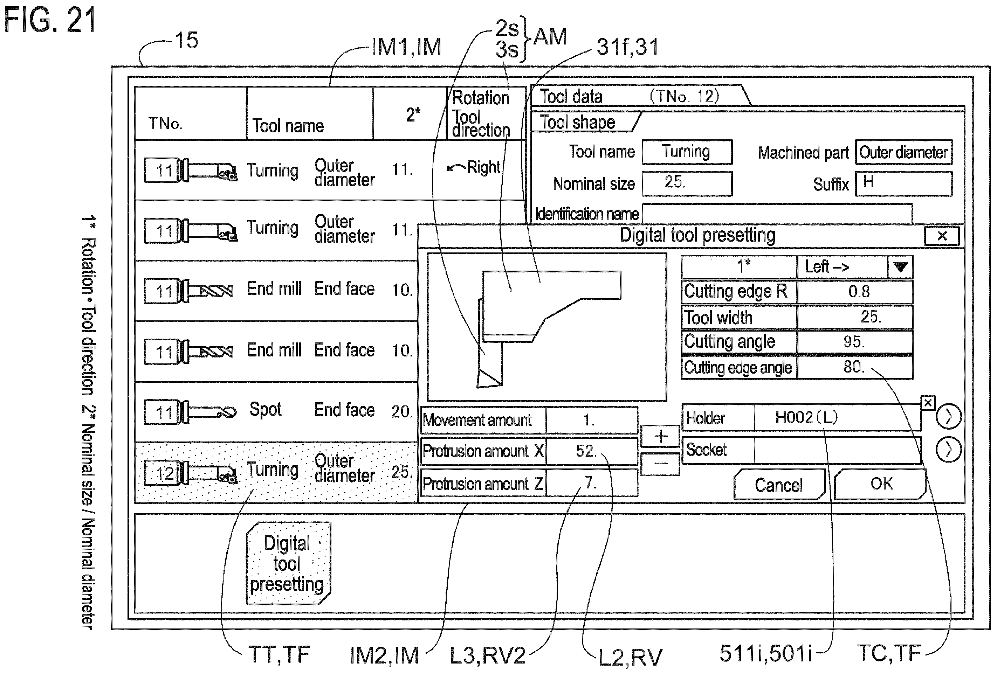

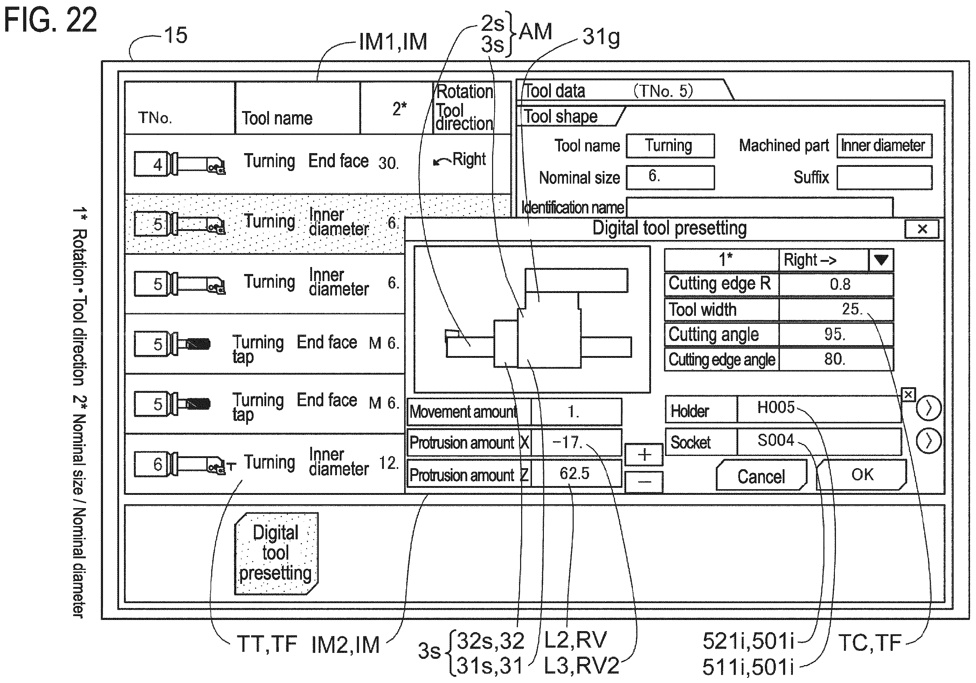

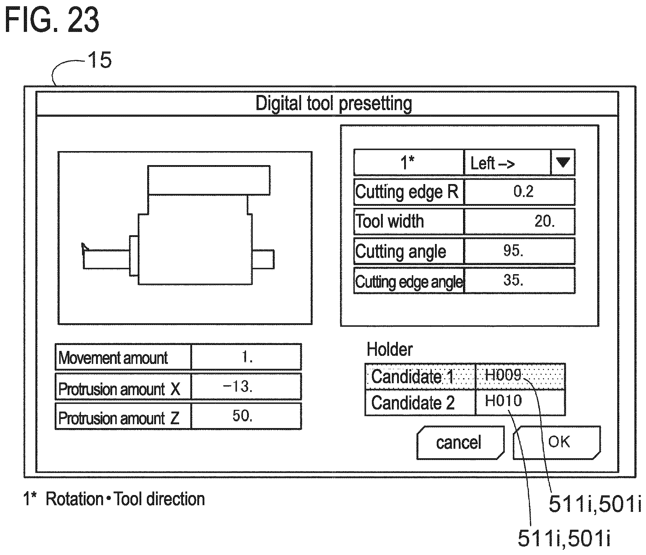

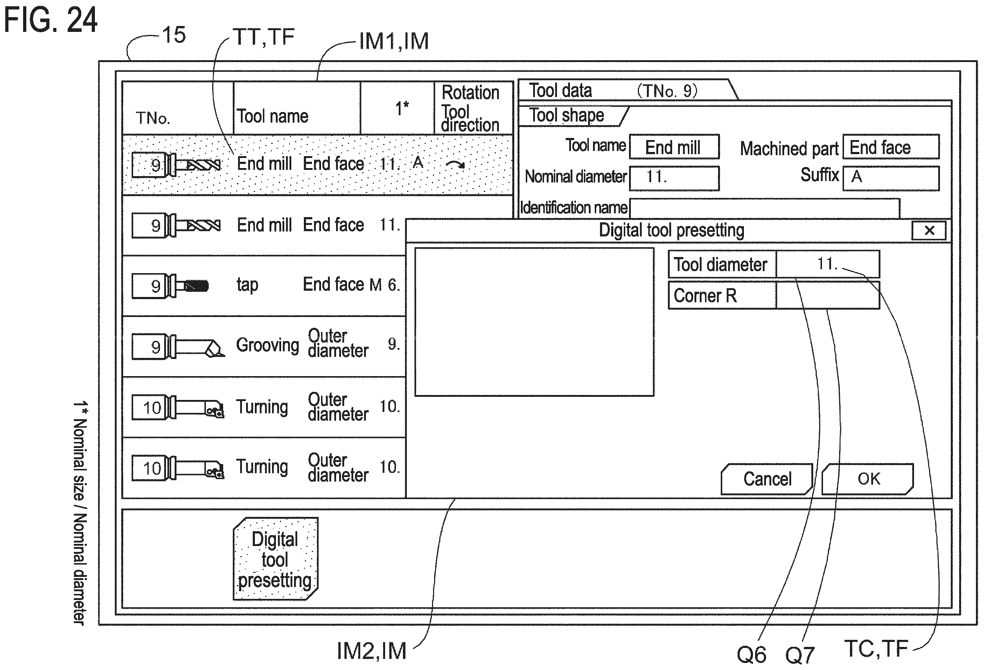

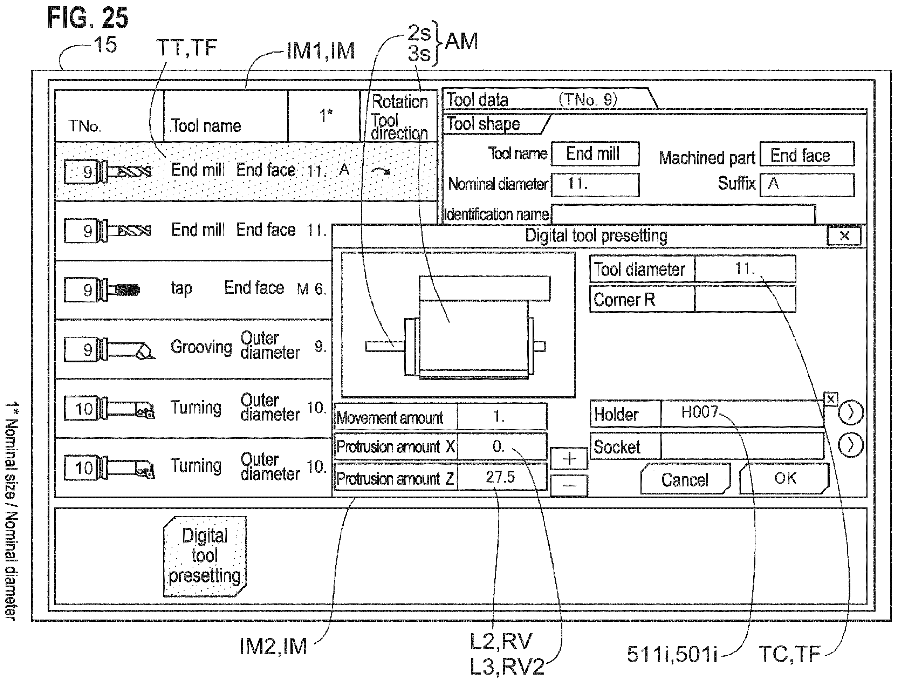

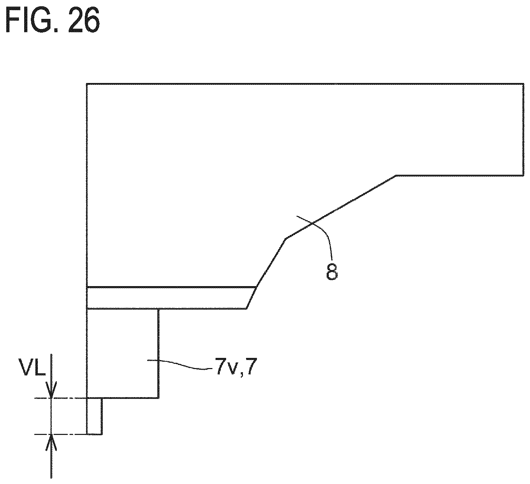

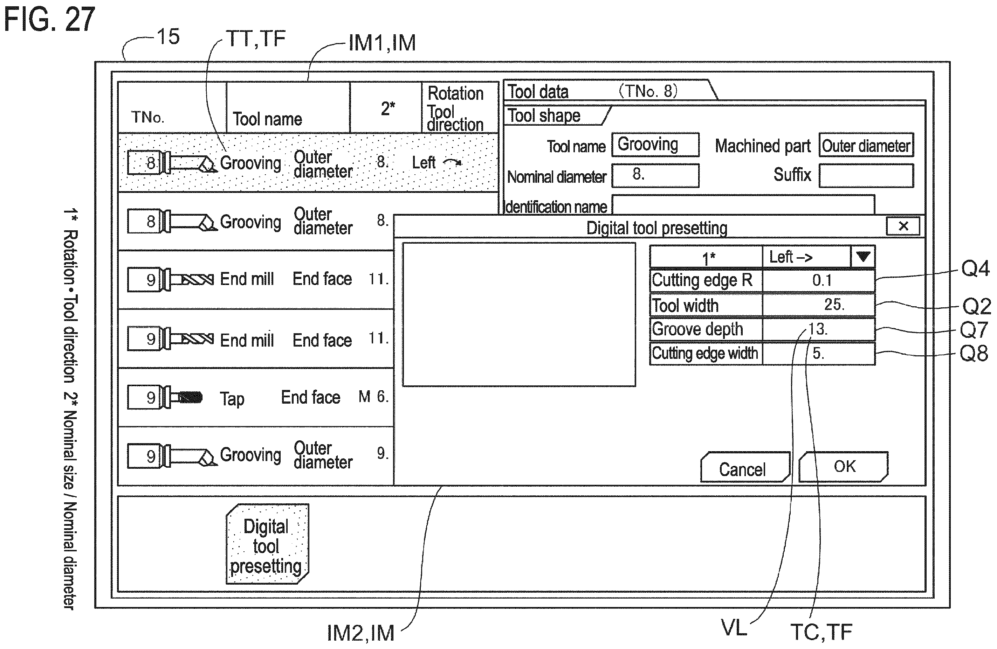

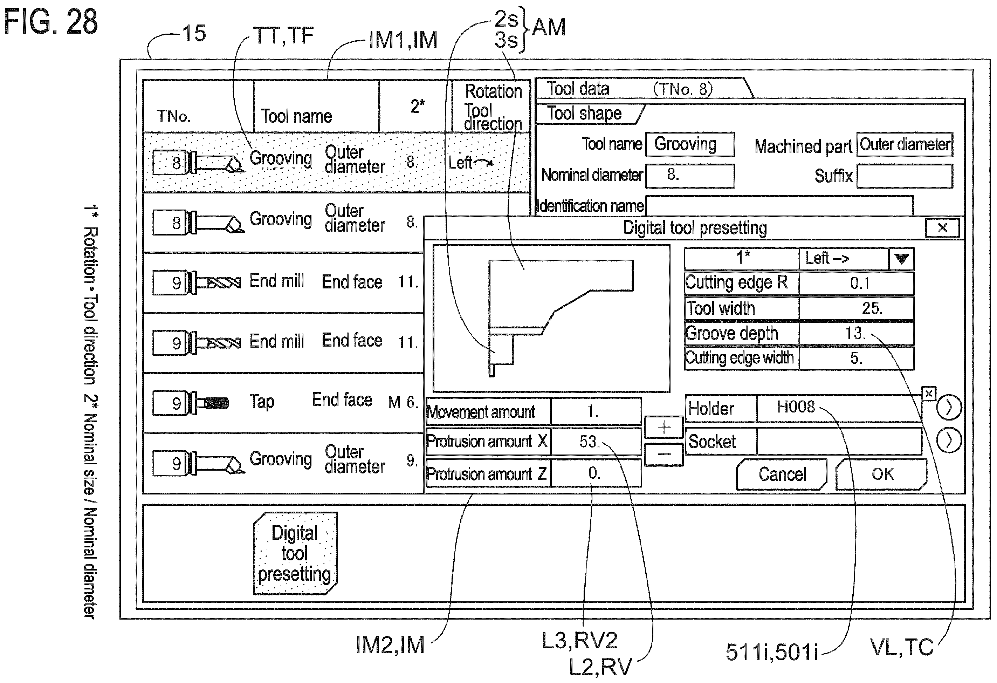

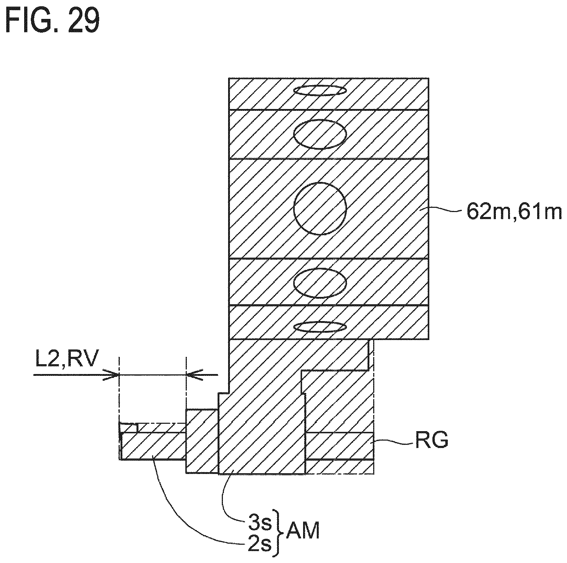

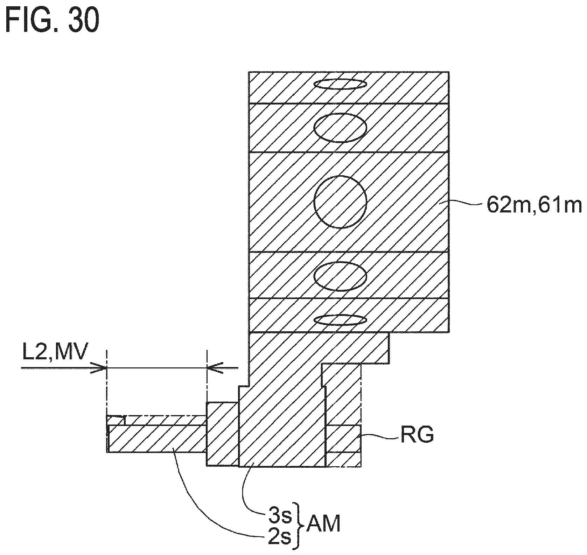

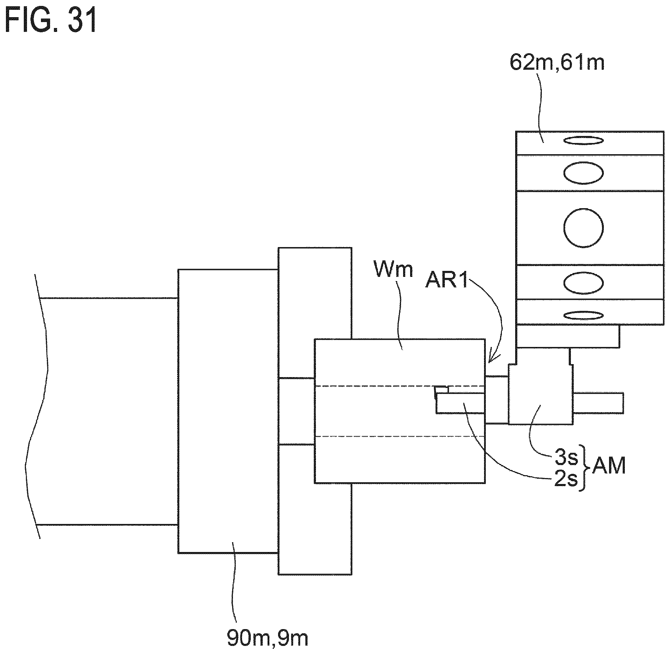

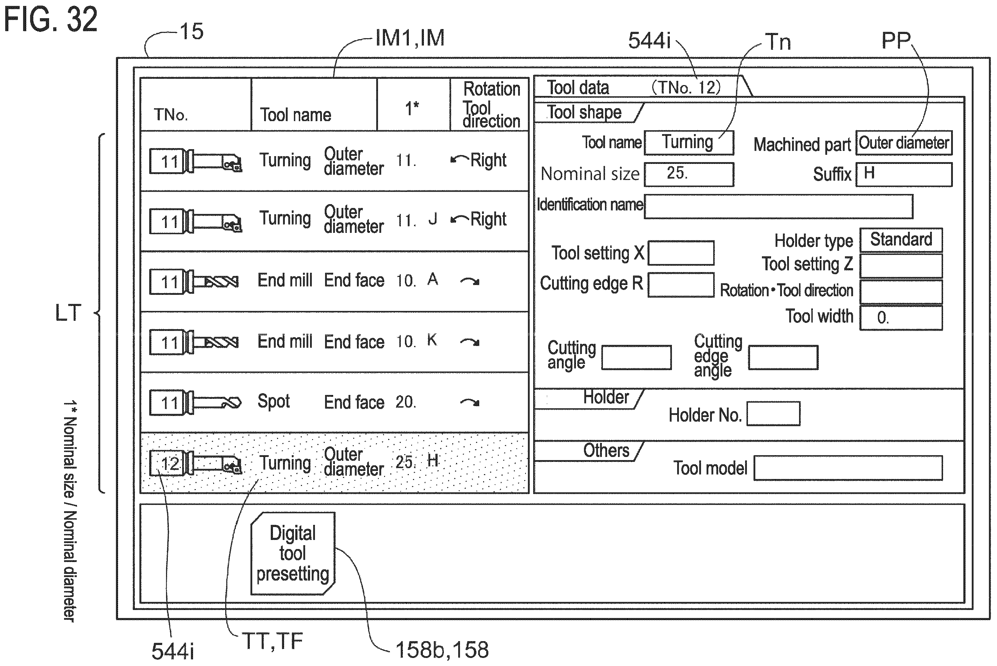

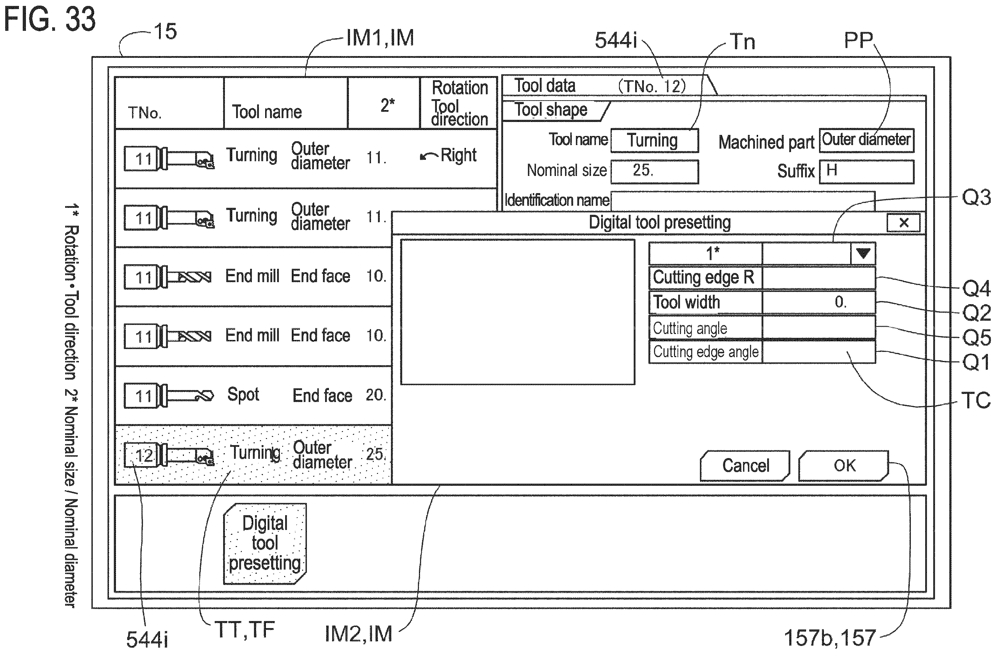

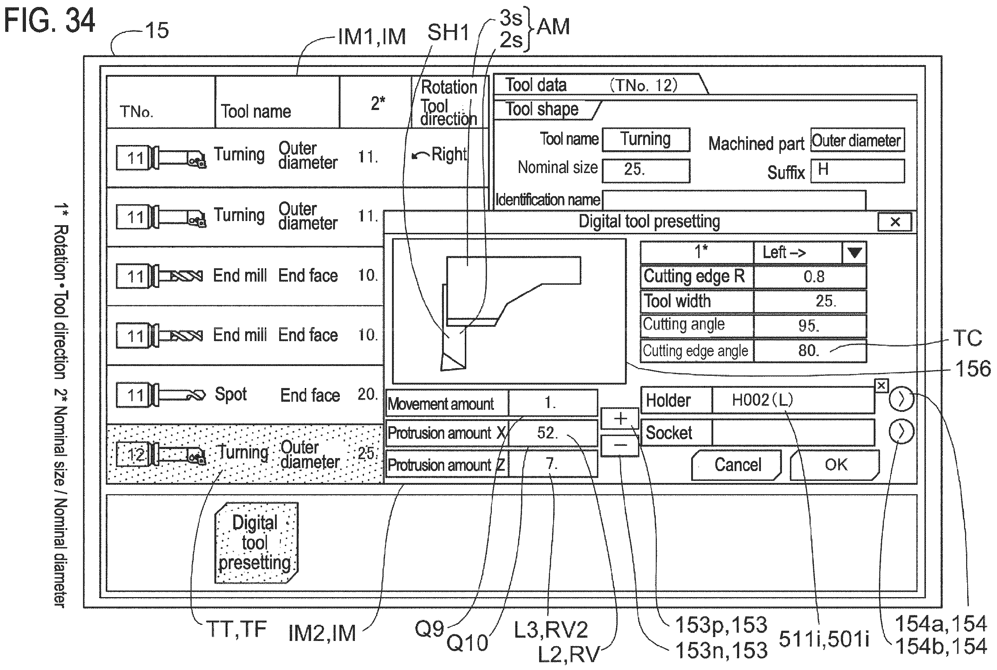

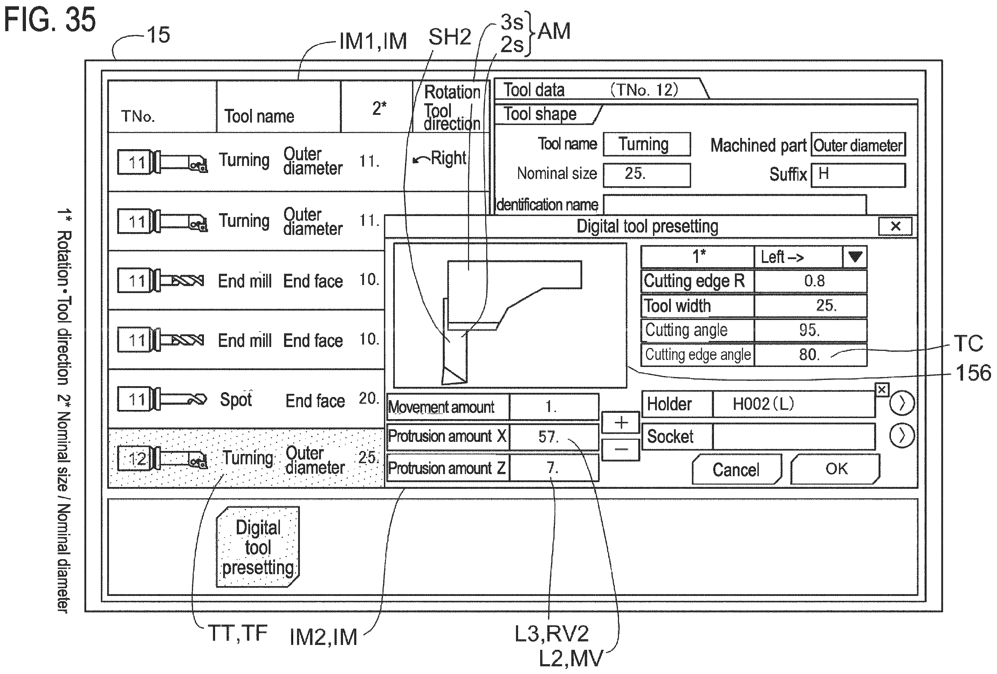

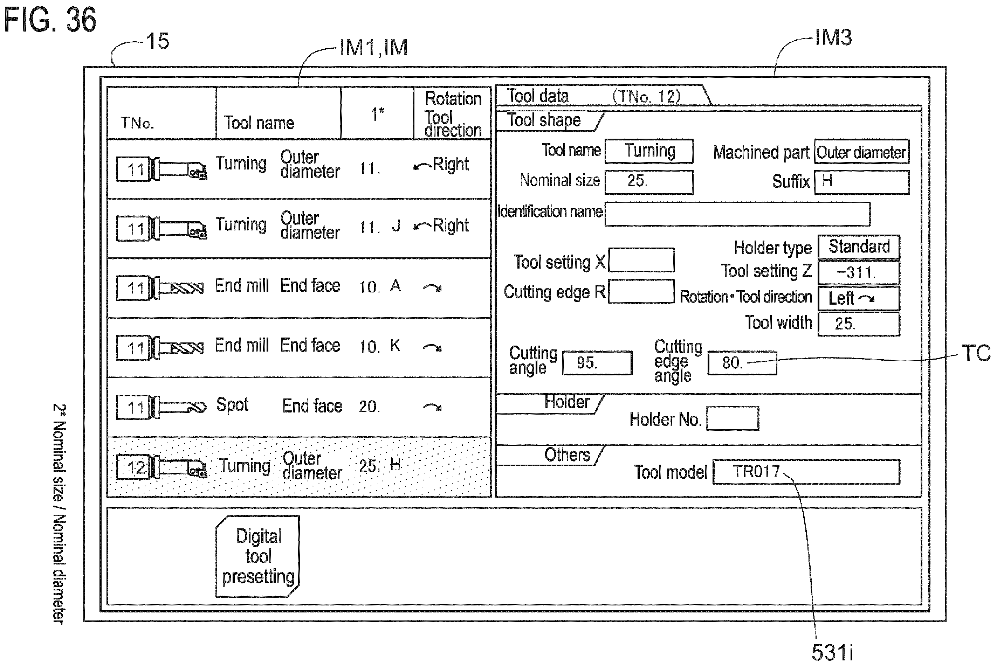

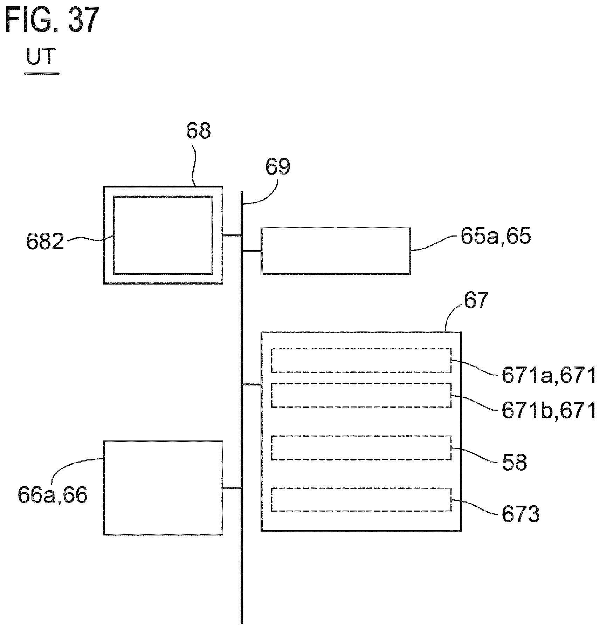

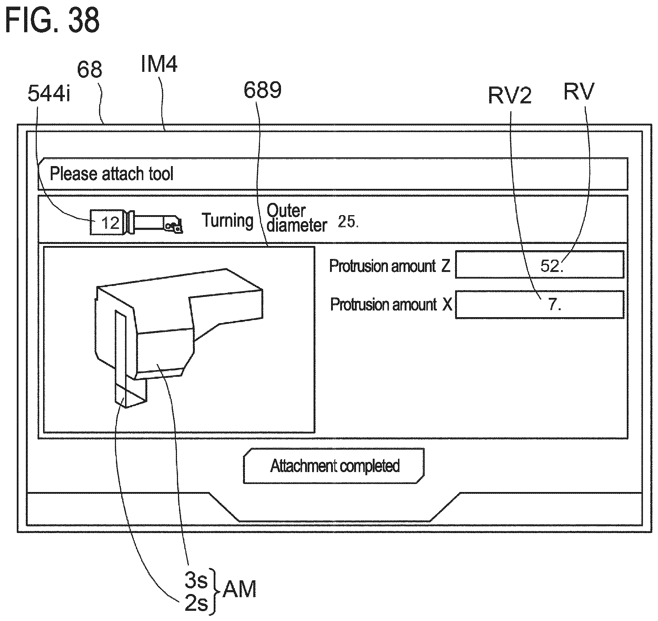

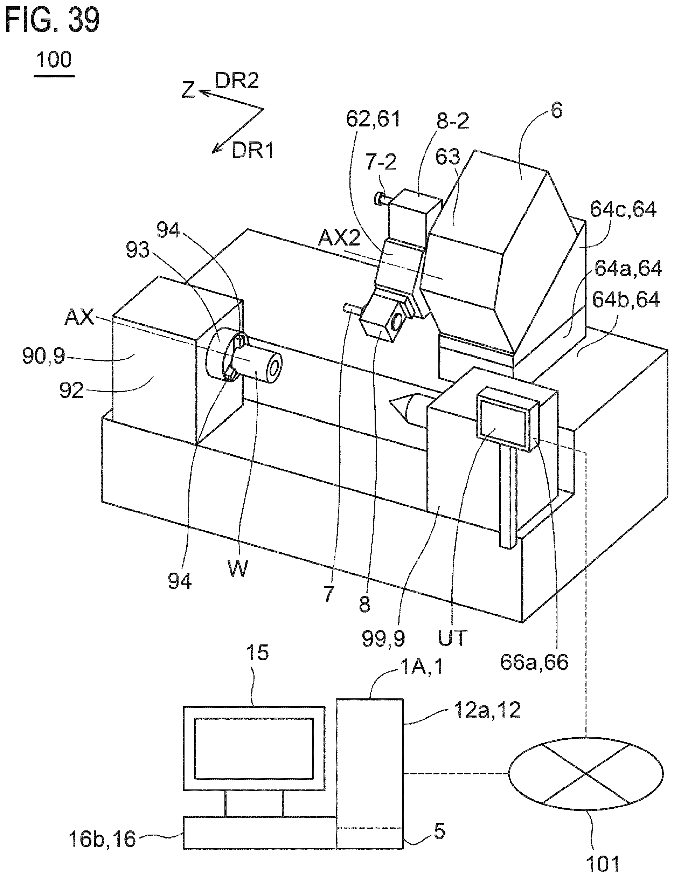

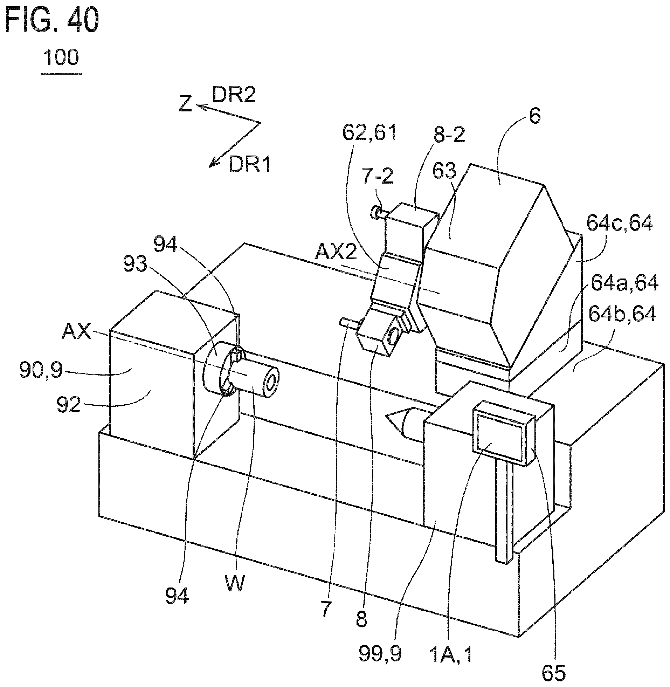

The machining simulation apparatus 1A, a machine tool 6, the machine tool system 100 in the first embodiment will be described with reference to FIGs. 1 to 40. FIG. 1 is a block diagram of a hardware configuration of the machining simulation apparatus 1A in the first embodiment, illustrating an example of the hardware configuration. FIG. 2 is a schematic perspective view of the machine tool 6 in the first embodiment, schematically illustrating the machine tool. FIG. 3 is a schematic illustration of a situation in which a machine tool model 6m is displayed on a display device 15. FIG. 4 is a diagram for describing a tool length N1 and a protrusion length N2 of a tool 7 with respect to a tool holding unit 8. FIG. 5 is a diagram for describing a model tool length L1 and a protrusion length L2 of a tool model 2 with respect to a holding unit model 3. FIG. 6 is a schematic illustration of a situation in which a processor 12 derives a specific tool model 2s, a specific holding unit model 3s, and a recommendation value RV of the protrusion length L2, based on tool information TF. FIG. 7 is a schematic side view of the specific tool model 2s, illustrating an example of the specific tool model 2s. FIG. 8 is a schematic side view of the specific holding unit model 3s, illustrating an example of the specific holding unit model 3s. FIG. 9 is a schematic illustration of a situation in which association data 41a, which associates the tool information TF with the recommendation value RV of the protrusion length L2, is stored in a memory 5. FIG. 10 is a diagram of association data 41b, which associates the tool information TF with the recommendation value RV of the protrusion length L2, illustrating an example of the association data 41b. FIG. 11 is a diagram for describing a cutting edge angle α, a cutting blade length V1, an inscribed circle diameter V2, a head portion length V3, and an additional length V4. FIG. 12 is a diagram of the association data 41b, which associates the tool information TF with the recommendation value RV of the protrusion length L2, illustrating another example of the association data 41b. FIG. 13 is a diagram of a calculation formula for calculating the recommendation value RV of the protrusion length L2, illustrating an example of the calculation formula. FIG. 14 is a schematic side view of an assembly model AM, illustrating an example of the assembly model AM. FIG. 15 is a schematic illustration of a situation in which the recommendation value RV of the protrusion length L2 is displayed in a format to be editable by an operator. FIG. 16 is a schematic illustration of a situation after the recommendation value RV of the protrusion length L2 has been compensated to a compensation value MV. FIG. 17 is a schematic illustration of a situation in which a machining simulation is being performed. FIG. 18 is a functional block diagram of the machining simulation apparatus 1A in the first embodiment, schematically illustrating the machining simulation apparatus 1A. FIG. 19 is a schematic illustration of a situation in which tool information TF is input into the machining simulation apparatus 1A. FIG. 20 is a schematic illustration of a situation in which an image IM for receiving input of the tool information TF is displayed on the display device 15. FIGs. 21 and 22 are each a schematic illustration of a situation in which the recommendation value RV of the protrusion length L2 and the like are displayed on the display device 15. FIG. 23 is a schematic illustration of a situation in which a plurality of candidates that can be the specific holding unit model are displayed on the display device 15. FIG. 24 is a schematic illustration of a situation in which the image IM for receiving input of the tool information TF is displayed on the display device 15. FIG. 25 is a schematic illustration of a situation in which the recommendation value RV of the protrusion length L2 and the like are displayed on the display device 15. FIG. 26 is a diagram for describing a grooving depth corresponding length VL. FIG. 27 is a schematic illustration of a situation in which the image IM for receiving input of the tool information TF is displayed on the display device 15. FIG. 28 is a schematic illustration of a situation in which the recommendation value RV of the protrusion length L2 and the like are displayed on the display device 15. FIG. 29 is a schematic illustration of a situation in which an interference check region RG is set, based on the specific tool model 2s, the specific holding unit model 3s, and the recommendation value RV of the protrusion length L2. FIG. 30 is a schematic illustration of the situation in which the interference check region RG is set, based on the specific tool model 2s, the specific holding unit model 3s, and the compensation value MV of the protrusion length L2. FIG. 31 is a schematic illustration of a situation in which presence or absence of abnormal interference is checked. FIG. 32 is a schematic illustration of a situation in which a first image IM1 including an image for receiving input or selection of a tool type TT is displayed on the display device 15. FIG. 33 is a schematic illustration of a situation in which a second image IM2 including an image for receiving input of tool feature data TC is displayed on the display device 15. FIG. 34 is a schematic illustration of a situation in which the recommendation value RV of the protrusion length L2 and the like are displayed on the display device 15. FIG. 35 is a schematic illustration of a situation after the recommendation value RV of the protrusion length L2 has been compensated to the compensation value MV. FIG. 36 is a schematic illustration of a situation in which after the second image IM2 is closed, a third image IM3 is displayed on the display device 15. FIG. 37 is a block diagram of a hardware configuration of a control unit UT of the machine tool 6, illustrating an example of the hardware configuration. FIG. 38 is a schematic illustration of a situation in which an instruction image IM4 is displayed on a second display device 68. FIG. 39 is a schematic illustration of the machine tool system 100 in the first embodiment. FIG. 40 is a schematic illustration of the machine tool system 100 in a modification of the first embodiment.

### (Machining Simulation Apparatus 1A)

As illustrated in FIG. 1, the machining simulation apparatus 1A includes a processor 12 and a memory 5. The machining simulation apparatus 1A may include a communication circuit 13. Further, the machining simulation apparatus 1A may include a display device 15 and/or an input device 16. The input device 16 may be incorporated in the display device 15 (more specifically, the display device 15 may be a display 152, which is provided with a touch panel in which the input device 16a is built.) Alternatively or additionally, the machining simulation apparatus 1A may include an input device 16b (examples including a button, a switch, a lever, a pointing device, and a keyboard), which is provided separately from the display device.

The machining simulation apparatus 1A may be made up of one computer. Alternatively, the plurality of computers may work in cooperation to function as the machining simulation apparatus 1A. In other words, the machining simulation apparatus 1A may include one computer, or may include a plurality of computers.

In the example illustrated in FIG. 1, the processor 12, the communication circuit 13, the memory 5, the display device 15, and/or the input device 16 are connected with one another through a bus 17. The processor 12 includes at least one processor 12a (for example, at least one CPU).

The memory 5 is a storage medium to be readable by the processor 12. The memory 5 may be, for example, a non-volatile or volatile semiconductor memory such as a RAM, a ROM, or a flash memory, may be a magnetic disk, or may be a memory in another type. In the memory 5, the arithmetic program 59 (examples including a simulation arithmetic program 59a, an assembly model creation program 59b, and a display program 59c), a machining program 58, and data (examples including data 51a of a holder model, data 52a of a socket model, data 55a of a constituent model, and data 57a of a workpiece model) are stored.

The memory 5 may be distributed at a plurality of locations. For example, a memory for storing the machining program 58 may be provided separately from a memory for storing the data or the arithmetic program 59.

The memory 5 may be partially disposed at a location far from the communication circuit 13. In other words, when the processor 12 executes the arithmetic program 59, the memory 5 may provide the processor 12 with at least a part of the arithmetic program 59 or a part of the data via the communication circuit 13. At least a part of the data may be input by an operator via the input device 16, and such input data may be stored in the memory 5. Alternatively or additionally, at least a part of the data may be transmitted from another computer to the machining simulation apparatus 1A. In this case, the processor 12 stores, in the memory 5, the data received via the communication circuit 13.

FIG. 2 illustrates an example of the machine tool 6. The machine tool 6 is, for example, a lathe 60. Alternatively, the machine tool 6 may be a machining center or any other machine tool.

In the example illustrated in FIG. 2, the machine tool 6 (more specifically, the lathe 60) includes: a tool 7; a tool holding unit 8, which holds the tool 7; and a support 61 (for example, a turret 62), which supports the tool holding unit 8. The support 61 may hold another tool 7-2 via another tool holding unit 8-2. The support 61 may have a plurality of attachment surfaces 614, to which the plurality of tool holding units are respectively attachable.

In the example illustrated in FIG. 2, the machine tool 6 (more specifically, the lathe 60) includes a plurality of constituent elements 9. In the example illustrated in FIG. 2, the constituent elements 9 include a workpiece holding device 90 (examples including a chuck 93 and a gripper 94), which holds a workpiece W. The constituent elements 9 may include a tailstock 99.

In FIG. 3, an illustration is given for an example of a machine tool model 6m, which is a model of the machine tool 6, and which is used in a machining simulation. More specifically, in FIG. 3, an illustration is given for a plurality of constituent models 9m, which are obtained by respectively modeling at least some of the constituent elements that constitute the machine tool 6. Further, in FIG. 3, an illustration is given for a tool model 2, which is obtained by modeling the tool 7, a holding unit model 3, which is obtained by modeling the tool holding unit 8, and a support model 61m (more specifically, a turret model 62m), which is obtained by modeling the support 61 (more specifically, the turret 62). Furthermore, in FIG. 3, an illustration is given for another holding unit model 3-2, which is obtained by modeling another tool holding unit 8-2, and another tool model 2-2, which is obtained by modeling another tool 7-2. The tool model 2 corresponds to the tool 7, and has substantially the same shape as the tool 7. The holding unit model 3 corresponds to the tool holding unit 8, and has substantially the same shape as the tool holding unit 8. The support model 61m (for example, the turret model 62m) corresponds to the support 61 (for example, the turret 62), and has substantially the same shape as the support 61 (for example, the turret 62). The support model 61m may have a plurality of virtual attachment surfaces 614m, to which the plurality of holding unit models 3 are respectively attachable. Another holding unit model 3-2 corresponds to another tool holding unit 8-2, and has substantially the same shape as another tool holding unit 8-2. Further, another tool model 2-2 corresponds to another tool 7-2, and has substantially the same shape as another tool 7-2.

As illustrated in FIG. 3, a plurality of constituent models 9m, which are obtained by respectively modeling at least some of the constituent elements that constitute the machine tool 6, respectively correspond to a plurality of constituent elements 9 of the machine tool 6. For example, the workpiece holding device model 90m corresponds to the workpiece holding device 90, and has substantially the same shape as the workpiece holding device 90. More specifically, a gripper model 94m corresponds to the gripper 94, which is one of the constituent elements that constitute the machine tool 6, and has substantially the same shape as the gripper 94. Further, a chuck model 93m corresponds to the chuck 93, which is one of the constituent elements that constitute the machine tool 6, and has substantially the same shape as the chuck 93. Further, a tailstock model 99m corresponds to the tailstock 99, and has substantially the same shape as the tailstock 99. In the example illustrated in FIG. 3, the workpiece holding device model 90m virtually holds a workpiece model Wm. The workpiece model Wm corresponds to the workpiece W. Further, the workpiece model Wm has substantially the same shape as the workpiece W.

FIG. 4 illustrates the tool length N1 and the protrusion length N2 of the tool 7 with respect to the tool holding unit 8. It is to be noted that the tool length N1 is intended to mean, for example, a distance from a machine origin G0 (or a reference point, the position of which is fixed with respect to the machine origin G0) of the machine tool 6 to a tip end 7e of the tool 7 (more specifically, a distance in a direction along the longitudinal direction of the tool 7).

FIG. 5 illustrates a part of a three-dimensional model used in the machining simulation (more specifically, an assembly model AM in which the holding unit model 3 and the tool model 2 are used in combination, and the support model 61m). In FIG. 5, when the attached position (in other words, a relative position) of the tool model 2 with respect to the holding unit model 3 changes, the protrusion length L2 of the tool model 2 with respect to the holding unit model 3 changes. It is to be noted that in the example illustrated in FIG. 5, the protrusion length L2 denotes a protrusion length of the tool model 2 with respect to the holding unit model 3 in a direction along the longitudinal direction of the tool model 2.

When the protrusion length L2 changes, a model tool length L1 also changes. It is to be noted that the model tool length L1 is intended to mean a distance from a model reference point F0 to a tip end 2e of the tool model 2 (more specifically, a distance in the direction along the longitudinal direction of the tool model 2). Further, the model reference point F0 is intended to mean a point corresponding to the machine origin G0 in a simulation coordinate system or a point corresponding to a reference point, the position of which is fixed to the machine origin G0 in the simulation coordinate system. It is to be noted that the position data of the model reference point F0 is preferably stored in the memory 5 beforehand.

With regard to the three-dimensional model used in the machining simulation, in a case where a plurality of tool models 2 and a plurality of holding unit models 3 are prepared, specialized experience or knowledge is demanded in order to appropriately set the above-described model tool length L1 or the above-described protrusion length L2. In contrast to this, in the first embodiment, the machining simulation apparatus 1A derives a recommendation value of the above-described protrusion length L2. Thus, in a case where the machining simulation apparatus 1A in the first embodiment is used, even an operator with less experience is able to appropriately set the above-described protrusion length L2 (or the above-described model tool length L1). In the following description, the derivation of the recommendation value of the protrusion length L2 will be described in more detail.

In the example illustrated in FIG. 1, the memory 5 may store the plurality of holding unit models 3 (more specifically, the data (51a and 52a) of the plurality of holding unit models 3), the arithmetic program 59, and the machining program 58. The memory 5 may store a plurality of constituent models 9m (more specifically, the data 55a of a plurality of constituent models 9m). Further, the memory 5 may also store the workpiece model Wm (more specifically, the data 57a of the workpiece model Wm), which is obtained by modeling the workpiece W before machining.

As illustrated in FIG. 6, the processor 12 sets (more specifically, selects or creates) a specific tool model 2s, which is obtained by modeling the tool 7, based on tool information TF.

For example, in a case where the tool information TF includes information for identifying a rotating tool 71s (or in a case of including information for identifying a part of the shape of the rotating tool 71s), the processor 12 sets (more specifically, selects or creates) a specific rotating tool model 21s, which is obtained by modeling the rotating tool 71s. The processor 12 may select a specific rotating tool model 21s (more specifically, data of the specific rotating tool model 21s) to be suited to the rotating tool 71s from among the plurality of tool models 2 (more specifically, data 53a of the plurality of tool models 2), which are stored in the memory 5. Alternatively, the processor 12 may create the specific rotating tool model 21s (more specifically, data of the specific rotating tool model 21s), which is obtained by modeling the rotating tool 71s.

In FIG. 7, an example of the specific tool model 2s, which has been set (more specifically, selected or created) by the processor 12, is illustrated.

As illustrated in FIG. 6, the processor 12 selects a specific holding unit model 3s from among the plurality of holding unit models 3, which are stored in the memory 5, based on the above-described tool information TF. More specifically, the processor 12 selects data of the specific holding unit model 3s from among the data (51a and 52a) of the plurality of holding unit models stored in the memory 5, based on the above-described tool information TF. It is to be noted that the specific holding unit model 3s to be selected by the processor 12 is a holding unit model that conforms to the above-described tool information TF or the above-described specific tool model 2s.

In FIG. 8, an example of the specific holding unit model 3s, which has been selected by the processor 12, is illustrated.

As illustrated in FIG. 6, the processor 12 derives a recommendation value RV of the protrusion length L2 of the specific tool model 2s with respect to the specific holding unit model 3s (more specifically, a recommendation value RV of the protrusion length L2 of the specific tool model 2s with respect to the specific holding unit model 3s in a direction along the longitudinal direction of the specific tool model 2s), based on the above-described tool information TF.

For example, as illustrated in FIG. 9, a case is assumed where association data 41a, which associates the tool information TF (more specifically, a tool identifier 70i) with the recommendation value RV of the protrusion length L2, is stored in the memory 5. In this case, by using the association data 41a, the processor 12 is capable of deriving the recommendation value RV of the above-described protrusion length L2, based on the tool information TF (more specifically, the tool identifier 70i).

Alternatively, as illustrated in FIG. 10, a case is assumed where association data 41b, which associates the tool information TF (more specifically, a tool type TT and tool feature data TC) with the recommendation value RV of the protrusion length L2, is stored in the memory 5. In this case, by using the association data 41b, the processor 12 is capable of deriving the recommendation value RV of the above-described protrusion length L2, based on the tool information TF (more specifically, the tool type TT and the tool feature data TC).

It is to be noted that in the example illustrated in FIG. 10, the processor 12 is capable of deriving the recommendation value RV of the above-described protrusion length L2, based on only the tool type TT and a cutting edge angle α. More specifically, a cutting blade length V1 is derivable from the cutting edge angle α, an inscribed circle diameter V2 (see FIG. 11) is derivable from the cutting blade length V1, and a head portion length V3 (see FIG. 11) is derivable from the inscribed circle diameter V2. Further, by adding the head portion length V3 and an additional length V4 (see FIG. 11), the recommendation value RV of the protrusion length L2 is derivable.

Alternatively, in the example illustrated in FIG. 12, a plurality of cutting blade lengths (9 mm and 8 mm) are prepared for one edge angle (80 degrees). In this case, the processor 12 may be configured to derive the recommendation value RV of the above-described protrusion length L2, based on the tool type TT, the cutting edge angle α, and the cutting blade length V1.

Further alternatively, as illustrated in FIG. 13, a case is assumed where calculation formulae each for calculating the recommendation value RV of the protrusion length L2 are stored in the memory 5. In this case, the processor 12 is capable of deriving the recommendation value RV of the above-described protrusion length L2, based on the tool information TF (more specifically, the tool type TT and the tool feature data TC) and a calculation formula stored in the memory 5.

FIG. 14 illustrates an example of an assembly model AM, in which the above-described specific tool model 2s and the above-described specific holding unit model 3s are used in combination so that the above-described protrusion length L2 is the recommendation value RV.

As illustrated in FIG. 15, the display device 15 may display the above-described recommendation value RV, which has been derived by the processor 12, in a format to be editable by an operator. In the example illustrated in FIG. 15, buttons 153 (more specifically, a plus button 153p and a minus button 153n) for changing the recommendation value RV are displayed on the display device 15. In the example illustrated in FIG. 15, by operating the button 153 displayed on the display device 15 via the input device 16, it is possible to change the above-described protrusion length L2 from the recommendation value RV to a compensation value MV (in other words, the compensation value MV, which has been compensated from the recommendation value RV).

FIG. 16 illustrates a situation after the above-described protrusion length L2 has been changed from the recommendation value RV to the compensation value MV. It is to be noted that in accordance with a change of the protrusion length L2 from the recommendation value RV to the compensation value MV, the shape of the assembly model AM is also changed in the image displayed on the display device 15.

As illustrated in FIG. 15 or FIG. 16, the processor 12 creates an assembly model AM, in which the specific tool model 2s and the specific holding unit model 3s are used in combination so that the above-described protrusion length L2 is either the above-described recommendation value RV or the above-described compensation value MV.

It is to be noted that in addition to the specific tool model 2s and the specific holding unit model 3s, the assembly model AM may include the support model 61m (more specifically, the turret model 62m). Further, in the example illustrated in FIGs. 15 and 16, the assembly model AM is displayed on the display device 15. Alternatively, the display of the assembly model AM on the display device 15 may be omitted.

As illustrated in FIG. 17, by using the plurality of constituent models 9m, the workpiece model Wm, and the assembly model AM, the processor 12 virtually executes the machining program 58, and checks whether the above-described assembly model AM abnormally interferes with any of the plurality of constituent models 9m (examples including the gripper model 94m, the chuck model 93m, and the tailstock model 99m) or the workpiece model Wm. It is to be noted that herein, the "abnormal interference" is intended to mean interference between models that should not interfere with each other. Examples of the "abnormal interference" include (1) interference between the specific holding unit model 3s and the workpiece model Wm, (2) interference between the assembly model AM and the gripper model 94m, and (3) interference between the assembly model AM and the tailstock model 99m. It is to be noted that herein, virtually executing the machining program 58 encompasses the processor 12 executing the machining program 58 via the arithmetic program 59. In other words, the processor 12 executes the arithmetic program 59, and thus the processor 12 may process (in other words, interpret) the machining program 58. Further, the processor 12 may check the presence or absence of the above-described abnormal interference, based on the processing (in other words, based on the interpretation). Further, herein, the machining program to be virtually executed by the processor 12 also encompasses a pseudo machining program obtained by editing the machining program for the simulation, in addition to the machining program to be actually executed by the processor of the machine tool.

By virtually executing the machining program 58, the processor 12 may check whether a model (for example, the support model 61m, another holding unit model 3-2, which is virtually attached to the support model 61m, or the other tool model 2-2) moving together with the above-described assembly model AM, abnormally interferes with any of the plurality of constituent models 9m (for example, the workpiece holding device model 90m and the tailstock model 99m) or the workpiece model Wm.

In the machining simulation apparatus 1A in the first embodiment, the specific holding unit model 3s for use in the machining simulation is selected, based on the tool information TF. Further, in the machining simulation apparatus 1 A in the first embodiment, such selection is made by the processor 12, and therefore the workload of the operator is reduced. Further, the specific tool model 2s, which conforms to the tool information TF, is set (more specifically, selected or created) by the processor 12, and the specific holding unit model 3s, which conforms to the tool information TF, is selected. This enables the machining simulation to be performed with use of the model that has been appropriately set or selected, based on the tool information TF.

In the machining simulation apparatus 1A in the first embodiment, the recommendation value RV of the protrusion length L2 of the specific tool model 2s with respect to the specific holding unit model 3s is derived. Further, the recommendation value RV of the protrusion length L2 is derived by the processor 12. Thus, even when the machining simulation apparatus 1A is operated by an operator with less experience, it becomes possible to appropriately set the above-described protrusion length L2. Further, the above-described protrusion length L2 is appropriately set, so that an interference check can be made with high accuracy in the machining simulation. Furthermore, in the machining simulation, the interference check is made with high accuracy, so that the interference check using the machine tool 6 can be omitted or simplified. The interference check in a machining site is omitted or simplified, so that the operation rate of the machine tool 6 can be improved. In addition, the workload of the operator in the machining site is reduced.

While installation of the machine tool 6 in a machining site is indispensable, it is possible to install the machining simulation apparatus 1A in any of the machining site, an office, or a house of an operator. In a case where the machining simulation apparatus 1A is installed in a place other than the machining site, the working environment of the operator is improved.

Further, the setup work is partially digitized, and digital transformations (DX) is promoted. In other words, by using the machining simulation apparatus 1A in the first embodiment, DX for improving the business flow is promoted.

### (Optional and Additional Configurations)

Subsequently, optional and additional configurations to be adoptable in the machining simulation apparatus 1A in the first embodiment will be described with reference to FIGs. 1 to 38.

### (Tool Model Storage Unit 53)

As illustrated in FIG. 18, a part of the memory 5 may constitute a tool model storage unit 53, which stores the data 53a of a plurality of tool models obtained by respectively modeling the plurality of tool models 2. The data 53a of the plurality of tool models includes at least an identifier 531i for identifying each tool model, and shape data 532s of each tool model.

The memory 5 (more specifically, the tool model storage unit 53) stores the identifier 531i for identifying the tool model in association with the shape data 532s of the tool model. The memory 5 (more specifically, the tool model storage unit 53) may store the identifier 531i for identifying the tool model in association with an identifier 501i for identifying the holding unit model suited to the tool model.

In response to the processor 12 creating the data 53a of a new tool model, the data 53a of such a new tool model may be stored in the memory 5 (more specifically, the tool model storage unit 53).

### (Holding Unit Model 3)

As illustrated in FIG. 2, the tool 7 is held by the tool holding unit 8.

A certain type of tool is directly supported by a tool holder. In this case, the tool holding unit 8 is made up of only the tool holder. Also, in this case, as illustrated in FIG. 21, the holding unit model 3, which corresponds to the tool holding unit 8, is made up of only the holder model 31, which corresponds to the tool holder. Herein, a holder model corresponding to a tool holder that directly supports a tool will be referred to as a "first type of holder model." In FIG. 21, an example of a first type of holder model 31f is illustrated.

A certain type of tool is supported by a tool holder via a socket. In this case, the tool holding unit 8 is made up of a combination of the tool holder and the socket. Also, in this case, as illustrated in FIG. 22, the holding unit model 3, which corresponds to the tool holding unit 8, is made up of a combination of the holder model 31, which corresponds to the tool holder, and a socket model 32, which corresponds to the socket. Herein, a holder model corresponding to a tool holder that supports a tool via a socket will be referred to as a "second type of holder model." In FIG. 22, an example of a second type of holder model 31g is illustrated.

### (First Database 51)

As illustrated in FIG. 18, a part of the memory 5 may constitute a first database 51, which stores the data 51a of a plurality of holder models 31, which are obtained by respectively modeling a plurality of tool holders. The data 51a of the plurality of holder models includes at least a first identifier 511i for identifying each holder model, and shape data 512s of each holder model. The data 51a of the plurality of holder models may include data 513t for specifying whether each holder model is the first type of holder model 31f or the second type of holder model 31g. Further, the data 51a of the plurality of holder models may include data 514p for specifying a reference position of each holder model.

The memory 5 (more specifically, the first database 51) stores the first identifier 511i for identifying the holder model 31 in association with the shape data 512s of the holder model. The memory 5 (more specifically, the first database 51) may store the first identifier 511i for identifying the first type of holder model 31f in association with the identifier 531i for identifying a tool model suited to the holder model. Further, the memory 5 (more specifically, the first database 51) may store the first identifier 511i for identifying the second type of holder model 31g in association with a second identifier 521i for identifying the socket model suited to the holder model.

### (Second Database 52)

As illustrated in FIG. 18, a part of the memory 5 may constitute a second database 52, which stores the data 52a of a plurality of socket models 32, which are obtained by respectively modeling a plurality of sockets. The data 52a of the plurality of socket models includes at least the second identifier 521i for identifying each socket model, and shape data 522s of each socket model.

The memory 5 (more specifically, the second database 52) stores the second identifier 521i for identifying the socket model 32 in association with the shape data 522s of the socket model. The memory 5 (more specifically, the second database 52) may store the second identifier 521i for identifying the socket model 32 in association with the first identifier 511i for identifying the holder model suited to the socket model. Further, the memory 5 (more specifically, the second database 52) may store the second identifier 521i for identifying the socket model 32 in association with the identifier 531i for identifying the tool model suited to the socket model.

### (Support Model Storage Unit 54)

As illustrated in FIG. 18, a part of the memory 5 may constitute a support model storage unit 54. The support model storage unit 54 stores data 54a of the support model 61m, which is obtained by modeling the support 61, and the support 61 supports the tool holding unit 8. The data 54a of the support model 61m includes at least an identifier 541i for identifying the support model, and shape data 542s of the support model. The data 54a of the support model 61m may include a third identifier 544i for identifying each of the plurality of virtual attachment surfaces 614m of the support model 61m.

The memory 5 (more specifically, the support model storage unit 54) may store the third identifier 544i for identifying the virtual attachment surface 614m in association with the tool information TF of the tool to be virtually attached to the virtual attachment surface 614m.

### (Constituent Model Storage Unit 55)

As illustrated in FIG. 18, a part of the memory 5 may constitute a constituent model storage unit 55, which stores the data 55a of the constituent models 9m, which are obtained by respectively modeling at least some of the elements that constitute the machine tool 6. The data 55a of the plurality of constituent models 9m includes at least an identifier 551i for identifying each constituent model, and shape data 552s of each constituent model.

### (Tool Information Storage Unit 56)

As illustrated in FIG. 18, a part of the memory 5 may constitute a tool information storage unit 56, which stores the tool information TF for use in deriving the recommendation value RV of the above-described protrusion length L2. The tool information TF may include a tool identifier 70i (see FIG. 9) for identifying a tool. Alternatively, the tool information TF may include the tool type TT (see FIGs. 10, 12, and 13), and the tool feature data TC (see FIGs. 10, 12, and 13).

### (Workpiece Model Storage Unit 57)

As illustrated in FIG. 18, a part of the memory 5 may constitute a workpiece model storage unit 57, which stores the data 57a of the workpiece model Wm, which is obtained by modeling the workpiece W before machining. The data 57a of the workpiece model Wm includes at least an identifier 571i for identifying the workpiece model, and shape data 572s of the workpiece model.

### (Processor 12)

As illustrated in FIG. 18, the processor 12 may include a tool model setting unit 121, a holding unit model selection unit 122, a protrusion length derivation unit 123, an assembly model creation unit 124, a model tool length calculation unit 125, and a machining simulation unit 126. More specifically, by executing the arithmetic program 59, which is stored in the memory 5, the processor 12 may function as the tool model setting unit 121, the holding unit model selection unit 122, the protrusion length derivation unit 123, the assembly model creation unit 124, the model tool length calculation unit 125, and the machining simulation unit 126.

### (Input of Tool Information TF)

As illustrated in FIG. 19, the tool information TF is input into the machining simulation apparatus 1A. The input of the tool information TF into the machining simulation apparatus 1A is made by using, for example, the input device 16 (in other words, a user interface). Alternatively, the input of the tool information TF into the machining simulation apparatus 1A may be made by the communication circuit 13 receiving the tool information TF from another computer.

### (Automatic Selection or Automatic Creation of Specific Tool Model 2s)

The arithmetic program 59, which is stored in the memory 5, is executed by the processor 12, and the processor 12 (more specifically, the tool model setting unit 121) may automatically select a specific tool model 2s, which conforms to the tool information TF, from among the plurality of tool models 2, which are stored in the memory 5, based on the tool information TF.

For example, the specific tool model 2s may be automatically selected, based on the tool identifier 70i (one aspect of the tool information TF). In the example illustrated in FIG. 9, the tool identifier 70i and the tool model (more specifically, the tool model identifier 531i) are stored in association with each other, in the memory 5. In this case, by using the association data, the processor 12 is capable of automatically selecting the specific tool model 2s, which conforms to the tool information TF, from among the plurality of tool models 2, which are stored in the memory 5, based on the tool identifier 70i.

Alternatively, as illustrated in FIG. 19, in response to the input of the tool information TF including the tool type TT and the tool feature data TC, the specific tool model 2s may be automatically selected by the processor 12. For example, a case is assumed where association data that associates the tool information TF including the tool type TT and the tool feature data TC with the tool model 2, which conforms to the tool information TF, is stored in the memory 5. In this case, by using the association data, the processor 12 is capable of automatically selecting the specific tool model 2s from among the plurality of tool models, which are stored in the memory 5, based on the tool type TT and the tool feature data TC.

Further alternatively, AI technology may be used for the above-described automatic selection. For example, (1) machine learning is performed with teacher data including the tool type TT and the tool feature data TC used as input data and the tool model 2 used as output data, and (2) the learned model obtained by the machine learning is stored in the memory 5. The processor 12 inputs the tool type TT and the tool feature data TC into the learned model stored in the memory 5, and automatically selects the tool model that has been output, as the specific tool model 2s.

Further alternatively, the processor 12 may be configured to automatically create the specific tool model 2s, which conforms to the tool information TF, based on the tool information TF. For example, in a case where the tool information TF includes shape data sufficient to specify the outer shape of the tool, the processor 12 is capable of automatically creating the specific tool model 2s, which conforms to the tool information TF, based on the shape data. The data of the specific tool model 2s, which has been automatically created, is preferably stored in the memory 5.

### (Automatic Selection of Specific Holding Unit Model 3s)

The arithmetic program 59, which is stored in the memory 5, is executed by the processor 12, and thus the processor 12 (more specifically, the holding unit model selection unit 122) selects a specific holding unit model 3s from among the plurality of holding unit models 3, which are stored in the memory 5, based on the tool information TF. The processor 12 may automatically select the specific holding unit model 3s from among the plurality of holding unit models 3, which are stored in the memory 5, based on the tool information TF.

For example, as illustrated in FIG. 9, a case is assumed where the association data that associates the tool information TF (more specifically, the tool identifier 70i) with the holding unit model (more specifically, the identifier 501i of the holding unit model) is stored in the memory 5. In this case, by using the association data, the processor 12 is capable of automatically selecting a specific holding unit model 3s, which conforms to the tool information TF, from among the plurality of holding unit models 3, which are stored in the memory 5, based on the tool information TF (more specifically, the tool identifier 70i).

Alternatively, as illustrated in FIG. 19, in response to the input of the tool information TF including the tool type TT and the tool feature data TC, the specific holding unit model 3s may be automatically selected by the processor 12. For example, a case is assumed where the association data that associates the tool information TF including the tool type TT and the tool feature data TC with the holding unit model 3, which conforms to the tool information TF, is stored in the memory 5. In this case, by using the association data, the processor 12 is capable of automatically selecting the specific holding unit model 3s from among the plurality of holding unit models 3, which are stored in the memory 5, based on the tool type TT and the tool feature data TC.

Further alternatively, AI technology may be used for the above-described automatic selection. For example, (1) machine learning is performed with the teacher data including the tool type TT and the tool feature data TC used as input data and the holding unit model 3 used as output data, and (2) the learned model obtained by the machine learning is stored in the memory 5. The processor 12 inputs the tool type TT and the tool feature data TC into the learned model stored in the memory 5, and automatically selects the holding unit model that has been output, as the specific holding unit model 3s.

In the example illustrated in FIG. 20, by executing the arithmetic program 59 (more specifically, the display program 59c), which is stored in the memory 5, the processor 12 displays, on the display device 15, an image IM for receiving input of the tool information TF. In response to the input of the tool information TF (for example, the tool type TT and the tool feature data TC) via the input device 16, the processor 12 selects (more specifically, automatically selects) a specific holding unit model 3s from among the plurality of holding unit models 3, which are stored in the memory 5. Further, as illustrated in FIG. 21, the processor 12 displays, on the display device 15, the specific holding unit model 3s, which has been selected (more specifically, the identifier 501i for identifying the specific holding unit model 3s).

As illustrated in FIG. 21, in response to the input of the tool information TF (for example, the tool type TT and the tool feature data TC) via the input device 16, the processor 12 may perform both (1) setting the specific tool model 2s, which conforms to the tool information TF, and (2) selecting the specific holding unit model 3s from among the plurality of holding unit models 3, which are stored in the memory 5.

It is to be noted that as illustrated in FIG. 22, a case is also assumed where the specific holding unit model 3s to be selected by the processor 12 includes a specific holder model 31s and a specific socket model 32s. In this case, the processor 12 displays, on the display device 15, both the first identifier 511i for identifying the specific holder model 31s that has been selected, and the second identifier 521i for identifying the specific socket model 32s that has been selected.

Further, a case is also assumed where there are a plurality of holding unit models 3, which conform to the tool information TF. In this case, the processor 12 may be configured to automatically select one optimal specific holding unit model 3s from among the plurality of holding unit models 3, which are stored in the memory 5, based on the tool information TF. Alternatively, the processor 12 may select a plurality of candidates that can be the specific holding unit model from among the plurality of holding unit models 3, which are stored in the memory 5, based on the tool information TF (see FIG. 23). In this case, (1) the processor 12 displays the plurality of candidates on the display device 15, and (2) in response to the selection of one of the plurality of candidates via the input device 16, the processor 12 determines the selected one as the specific holding unit model that has been selected finally.

### (Derivation of Recommendation Value RV of Protrusion Length L2)

The arithmetic program 59, which is stored in the memory 5, is executed by the processor 12, and thus the processor 12 (more specifically, the protrusion length derivation unit 123) derives the recommendation value RV of the above-described protrusion length L2, based on the tool information TF (more specifically, the tool type TT and the tool feature data TC). Hereinafter, a derivation procedure for the recommendation value RV based on the tool type TT and the tool feature data TC will be described with a plurality of examples.

In the example illustrated in FIG. 18, the memory 5 stores at least one file 43, in which data or a calculation formula for deriving the recommendation value RV of the protrusion length L2 is written. As illustrated in FIG. 10, a file 43a, which is stored in the memory 5, may include a table that associates the tool type TT, the tool feature data TC, and the recommendation value RV of the protrusion length L2. According to the invention, as illustrated in FIG. 13, a file 43b, which is stored in the memory 5, includes a calculation formula for calculating the recommendation value RV of the protrusion length L2, based on the tool type TT and the tool feature data TC.

### (First Example)

The first example is an example in which the tool type TT is a first type of turning tool. Further, the first example is an example in which the tool feature data TC includes a cutting edge angle of the tool. It is to be noted that the first type of turning tool is intended to mean a turning tool for machining a part other than the inner diameter of a workpiece (in other words, a part other than the inner surface of a workpiece).

In the example illustrated in FIG. 10, the memory 5 stores the recommendation value RV of the protrusion length L2 in association with the tool type TT (more specifically, a tool name Tn and a machined part PP) and the cutting edge angle α of the tool. More specifically, in the file 43a stored in the memory 5, the cutting edge angle α of the first type of turning tool and the recommendation value RV of the protrusion length L2 are associated with each other.

In the example illustrated in FIG. 10, in a case where the tool type TT is the first type of turning tool, the processor 12 is capable of deriving the recommendation value RV of the protrusion length L2, by using the information (more specifically, the file 43a) stored in the memory 5. More specifically, in the case where the tool type TT is the first type of turning tool (for example, in a case of the turning tool for turning an outer diameter or an end face of a workpiece), the processor 12 derives the recommendation value RV of the protrusion length L2 of the specific tool model 2s with respect to the specific holding unit model 3s, based on at least the cutting edge angle α of the turning tool. For example, in a case where the cutting edge angle α of the turning tool is 80 degrees, the processor 12 derives "52 mm" as the recommendation value RV of the protrusion length L2 (see FIG. 21).

In the example illustrated in FIG. 20, by executing the arithmetic program 59 (more specifically, the display program 59c), which is stored in the memory 5, the processor 12 displays, on the display device 15, the image IM for receiving input of the tool information TF. In response to the input of the tool information TF (for example, the tool type TT and the tool feature data TC including the cutting edge angle) via the input device 16, the processor 12 derives the recommendation value RV of the protrusion length L2 of the specific tool model 2s with respect to the specific holding unit model 3s, based on the tool information TF. Further, the processor 12 displays, on the display device 15, the recommendation value RV, which has been derived (see FIG. 21).

### (Second Example)

The second example is an example of a case where the tool type TT is a second type of turning tool. Further, the second example is an example in which the tool feature data TC includes a tool width. It is to be noted that the second type of turning tool is intended to mean a turning tool that machines the inner diameter of a workpiece (in other words, the inner surface of a workpiece).

In the example illustrated in FIG. 13, the memory 5 stores the recommendation value RV of the protrusion length L2 in association with the tool type TT (more specifically, the tool name Tn and the machined part PP) and a tool width TW. More specifically, in the file 43b, which is stored in the memory 5, the tool width TW of the second type of turning tool and the recommendation value RV of the protrusion length L2 are associated with each other.

In the example illustrated in FIG. 13, in a case where the tool type TT is the second type of turning tool, the processor 12 is capable of deriving the recommendation value RV of the protrusion length L2, by using the information (more specifically, the file 43b) stored in the memory 5. More specifically, in a case where the tool type TT is the second type of turning tool, the processor 12 derives the recommendation value RV of the protrusion length L2 of the specific tool model 2s with respect to the specific holding unit model 3s, based on at least the tool width TW of the turning tool. For example, in a case where the tool width TW of the turning tool is 25 mm, the processor 12 derives "62.5 mm" as the recommendation value RV of the protrusion length L2 (see FIG. 22).

In the example illustrated in FIG. 22, by executing the arithmetic program 59 (more specifically, the display program 59c), which is stored in the memory 5, the processor 12 displays, on the display device 15, the image IM for receiving input of the tool information TF. In response to the input of the tool information TF (for example, the tool type TT and the tool feature data TC including the tool width) via the input device 16, the processor 12 derives the recommendation value RV of the protrusion length L2 of the specific tool model 2s with respect to the specific holding unit model 3s, based on the tool information TF. Further, the processor 12 displays, on the display device 15, the recommendation value RV, which has been derived.

### (Third Example)

The third example is an example in which the tool type TT is a rotating tool. Further, the third example is an example in which the tool feature data TC includes a tool diameter. It is to be noted that examples of the rotating tool include a drill, a reamer tool, a tapping tool, a spot facing tool, a boring tool, and a milling tool. Further, the tool diameter is intended to mean the diameter of a tool shank.

In the example illustrated in FIG. 13, the memory 5 stores the recommendation value RV of the protrusion length L2 in association with the tool type TT (more specifically, the tool name Tn) and a tool diameter TD. More specifically, in the file 43b, which is stored in the memory 5, the tool diameter TD of the rotating tool and the recommendation value RV of the protrusion length L2 are associated with each other. The tool diameter TD of the rotating tool and the recommendation value RV of the protrusion length L2 may be associated with each other via a mathematical expression. For example, the tool diameter TD of the rotating tool and the recommendation value RV of the protrusion length L2 may be associated with each other by a mathematical expression, that is, the recommendation value RV = the tool diameter TD of the rotating tool × a constant (for example, the constant is "2.5").

In the example illustrated in FIG. 13, in a case where the tool type TT is the rotating tool, the processor 12 is capable of deriving the recommendation value RV of the protrusion length L2, by using the information (more specifically, the file 43b) stored in the memory 5. More specifically, in the case where the tool type TT is the rotating tool, the processor 12 derives the recommendation value RV of the protrusion length L2 of the specific tool model 2s with respect to the specific holding unit model 3s, based on at least the tool diameter TD of the rotating tool. For example, in a case where the tool diameter TD of the rotating tool is 11 mm, the processor 12 derives "27.5 mm" as the recommendation value RV of the protrusion length L2 (see FIG. 25).

In the example illustrated in FIG. 24, by executing the arithmetic program 59 (more specifically, the display program 59c), which is stored in the memory 5, the processor 12 displays, on the display device 15, the image IM for receiving input of the tool information TF. In response to the input of the tool information TF (for example, the tool type TT and the tool feature data TC including the tool diameter) via the input device 16, the processor 12 derives the recommendation value RV of the protrusion length L2 of the specific tool model 2s with respect to the specific holding unit model 3s, based on the tool information TF (see FIG. 25). Further, the processor 12 displays, on the display device 15, the recommendation value RV, which has been derived.

### (Fourth Example)

The fourth example is an example of a case where the tool type TT is a first type of grooving tool. Further, the fourth example is an example in which the tool feature data TC includes a grooving depth corresponding length VL of the tool. It is to be noted that the first type of grooving tool is intended to mean a grooving tool that machines a part other than the inner diameter of a workpiece (in other words, a part other than the inner surface of a workpiece). The grooving depth corresponding length VL is intended to mean the length of a blade portion of a grooving tool 7v, as illustrated in FIG. 26.

In the example illustrated in FIG. 13, the memory 5 stores the recommendation value RV of the protrusion length L2 in association with the tool type TT (more specifically, the tool name Tn and the machined part PP) and the grooving depth corresponding length VL of the tool. More specifically, in the file 43b stored in the memory 5, the grooving depth corresponding length VL of the grooving tool and the recommendation value RV of the protrusion length L2 are associated with each other. The grooving depth corresponding length VL of the grooving tool and the recommendation value RV of the protrusion length L2 may be associated with each other via a mathematical expression. For example, the grooving depth corresponding length VL of the grooving tool and the recommendation value RV of the protrusion length L2 may be associated by a mathematical expression, that is, the recommendation value RV = the grooving depth corresponding length VL of the grooving tool + a constant (for example, the constant is "40").

In the example illustrated in FIG. 13, in a case where the tool type TT is the first type of grooving tool, the processor 12 is capable of deriving the recommendation value RV of the protrusion length L2, by using the information (more specifically, the file 43b) stored in the memory 5. More specifically, in a case where the tool type TT is a first type of grooving tool (for example, in a case of a grooving tool that forms a grooving on an outer diameter or an end face of a workpiece), the processor 12 derives the recommendation value RV of the protrusion length L2 of the specific tool model 2s with respect to the specific holding unit model 3s. For example, in a case where the grooving depth corresponding length VL of the grooving tool is 13 mm, the processor 12 derives "53 mm" as the recommendation value RV of the protrusion length L2 (see FIG. 28).

In the example illustrated in FIG. 27, by executing the arithmetic program 59 (more specifically, the display program 59c), which is stored in the memory 5, the processor 12 displays, on the display device 15, the image IM for receiving input of the tool information TF. In response to the input of the tool information TF (for example, the tool type TT and the tool feature data TC including the grooving depth corresponding length VL) via the input device 16, the processor 12 derives the recommendation value RV of the protrusion length L2 of the specific tool model 2s with respect to the specific holding unit model 3s, based on the tool information TF (see FIG. 28). Further, the processor 12 displays, on the display device 15, the recommendation value RV, which has been derived.

It is to be noted that in the above-described first to fourth examples, in a case where a derived recommendation value RV exceeds a preset upper limit value, the processor 12 may set the recommendation value RV of the protrusion length L2 of the specific tool model 2s with respect to the specific holding unit model 3s to such an upper limit value. Further, in a case where the derived recommendation value RV exceeds the preset upper limit value, the processor 12 may display, on the display device 15, such an upper limit value as the recommendation value RV. On the other hand, in a case where the derived recommendation value RV is equal to or smaller than the preset upper limit value, the processor 12 displays, on the display device 15, the recommendation value RV without change.

### (Creation of Assembly Model AM)

As illustrated in FIGs. 21, 22, 25, and 28, the processor 12 creates the assembly model AM. More specifically, the arithmetic program 59 (more specifically, the assembly model creation program 59b), which is stored in the memory 5, is executed by the processor 12, and thus the processor 12 (more specifically, the assembly model creation unit 124) creates the assembly model AM in which the specific tool model 2s and the specific holding unit model 3s are used in combination so that the protrusion length L2 is the recommendation value RV. In other words, the processor 12 creates the assembly model AM that satisfies the first condition that the protrusion length L2 of the specific tool model 2s with respect to the specific holding unit model 3s is the above-described recommendation value RV.

It is to be noted that as illustrated in FIG. 22, in a case where the specific holding unit model 3s to be selected, based on the tool information TF, includes the specific holder model 31s and the specific socket model 32s, the processor 12 creates the assembly model AM in which the specific tool model 2s is virtually held by the specific holder model 31s via the specific socket model 32s. It is to be noted that the assembly model AM, which has been created, is the assembly model that satisfies the above-described first condition.

As illustrated in FIG. 16, the recommendation value RV, which has been derived by the processor 12, of the protrusion length L2 may be changed to the compensation value MV. In this case, the processor 12 (more specifically, the assembly model creation unit 124) creates the assembly model AM in which the specific tool model 2s and the specific holding unit model 3s are used in combination so that the protrusion length L2 is the compensation value MV. In other words, the processor 12 creates the assembly model AM that satisfies a second condition that the protrusion length L2 of the specific tool model 2s with respect to the specific holding unit model 3s is the above-described compensation value MV.

As illustrated in FIGs. 21, 22, 25, and 28, in response to the input of the tool information TF (for example, the tool type TT and the tool feature data TC) via the input device 16, the processor 12 may perform all of (1) setting the specific tool model 2s, which conforms to the tool information TF, (2) selecting a specific holding unit model 3s from among the plurality of holding unit models 3, which are stored in the memory 5, (3) deriving the above-described recommendation value RV, and (4) creating the above-described assembly model AM.

### (Performing of Machining Simulation)

As illustrated in FIG. 17, the processor 12 virtually machines a workpiece model Wm, by using the specific tool model 2s. More specifically, by virtually executing the machining program 58, the processor 12 virtually machines the workpiece model Wm, by using the specific tool model 2s.

For example, by virtually executing the machining program 58, which is stored in the memory 5, the processor 12 generates movement path data of the specific tool model 2s. More specifically, by executing the arithmetic program 59 (more specifically, the simulation arithmetic program 59a), the processor 12 processes (in other words, interprets) the machining program 58. Further, the processor 12 generates the movement path data of the specific tool model 2s, based on such processing (in other words, based on the interpretation). The processor 12 may display, on the display device 15, a moving image in which the specific tool model 2s and a plurality of models (3s, 61m, 2-2, and 3-2) that move together with the specific tool model 2s with respect to the workpiece model Wm along a path specified by the above-described movement path data.

By virtually executing the machining program 58, which is stored in the memory 5, the processor 12 checks whether the assembly model AM abnormally interferes with any of the plurality of constituent models 9m (examples including the gripper model 94m, the chuck model 93m, and the tailstock model 99m) or the workpiece model Wm. Additionally, by virtually executing the machining program 58, the processor 12 may check whether a model (for example, the support model 61m, another holding unit model 3-2, which is virtually attached to the support model 61m, or another tool model 2-2) that moves together with the assembly model AM abnormally interferes with any of the plurality of constituent models 9m (examples including the gripper model 94m, the chuck model 93m, and the tailstock model 99m) or the workpiece model Wm.

### (Setting of Interference Check Region RG)

As illustrated in FIG. 29 or FIG. 30, the processor 12 may set an interference check region RG, based on the above-described specific tool model 2s, the above-described specific holding unit model 3s, and either the above-described recommendation value RV or the above-described compensation value MV. It is to be noted that in FIGs. 29 and 30, hatching is applied to the interference check region RG. The interference check region RG preferably encompasses the entirety of the assembly model AM. The interference check region RG may encompass a part of the support model 61m (or the entirety of the support model 61m), in addition to the entirety of the assembly model AM.

In the example illustrated in FIG. 29, the processor 12 creates the assembly model AM, which satisfies the first condition that the protrusion length of the specific tool model 2s with respect to the specific holding unit model 3s is the above-described recommendation value RV, and sets the interference check region RG, based on the shape of the assembly model.

On the other hand, in the example illustrated in FIG. 30, the processor 12 creates the assembly model AM, which satisfies the second condition that the protrusion length of the specific tool model 2s with respect to the specific holding unit model 3s is the above-described compensation value MV, and sets the interference check region RG, based on the shape of the assembly model.

In the example illustrated in FIG. 31, by virtually executing the machining program 58 via the arithmetic program 59 (more specifically, the simulation arithmetic program 59a), the processor 12 checks whether the above-described interference check region RG abnormally interferes with any of the plurality of constituent models 9m or the workpiece model Wm. In the example illustrated in FIG. 31, as indicated by an arrow AR1, the abnormal interference is present between the specific holding unit model 3s and the workpiece model Wm. In a case where the processor 12 determines "presence" of the abnormal interference, the processor 12 preferably displays, on the display device 15, a message indicating the presence of the abnormal interference.

### (Protrusion Length L2 in Main Direction and Protrusion Length L3 in Sub Direction)

In the example illustrated in FIGs. 21, 22, 25, and 28, the protrusion length L2 is intended to mean a protrusion amount of the specific tool model 2s with respect to the specific holding unit model 3s in a direction along the longitudinal direction of the specific tool model 2s. In the example illustrated in FIGs. 21 and 28, the protrusion length L2 is a protrusion amount of the specific tool model 2s with respect to the specific holding unit model 3s in X-axis direction (more specifically, a direction perpendicular to the rotation axis of a workpiece). On the other hand, in the example illustrated in FIGs. 22 and 25, the protrusion length L2 is a protrusion amount of the specific tool model 2s with respect to the specific holding unit model 3s in Z-axis direction (more specifically, a direction parallel to the rotation axis of a workpiece).

Herein, the direction along the longitudinal direction of the specific tool model 2s is defined as a main direction, and the direction perpendicular to the longitudinal direction of the specific tool model 2s is defined as a sub direction.

In the example illustrated in FIGs. 21, 22, 25, and 28, the processor 12 derives a recommendation value (hereinafter, referred to as a "second recommendation value RV2") of a protrusion length L3 of a cutting edge of the specific tool model 2s from a reference position of the specific holding unit model 3s in the sub direction, based on the tool information TF (more specifically, the tool type TT and the tool feature data TC). It is to be noted that the data 514p (see FIG. 18), which indicates the reference position of each holding unit model 3, is preferably stored in the memory 5 beforehand.

In the example illustrated in FIGs. 21 and 28, the protrusion length L3 in the sub direction is a protrusion amount of the cutting edge from the reference position in Z-axis direction (more specifically, the direction parallel to the rotation axis of the workpiece). On the other hand, in the example illustrated in FIGs. 22 and 25, the protrusion length L3 in the sub direction is a protrusion amount of the cutting edge from the reference position in X-axis direction (more specifically, the direction perpendicular to the rotation axis of the workpiece).

The processor 12 may derive the above-described second recommendation value RV2, based on the specific tool model 2s (more specifically, the shape data of the specific tool model 2s) to be set, based on the tool information TF, and the specific holding unit model 3s (more specifically, the shape data of the specific holding unit model 3s and the data 514p, which indicates the reference position of the specific holding unit model 3s) to be selected, based on the tool information TF.

### (Image Displayed on Display Device 15)

In the example illustrated in FIG. 32, by executing the arithmetic program 59 (more specifically, the display program 59c), which is stored in the memory 5, the processor 12 displays, on the display device 15, a first image IM1 including an image for receiving input or selection of the tool type TT. In the example illustrated in FIG. 32, the first image IM1 includes a list LT of tool types. In response to an operator selecting one tool type from the list via the input device 16, the processor 12 stores, in the memory 5, the selected tool type as a part of the tool information TF.

In the example illustrated in FIG. 32, in the above-described list LT, which is displayed on the display device 15, the third identifier 544i for identifying the virtual attachment surface 614m of the support model 61m and the tool type TT are associated with each other. In this case, together with the selection of one tool type TT from the above-described list LT, the virtual attachment surface 614m of the support model 61m is selected. In response to the selection of one tool type TT from the above-described list LT via the input device 16, the processor 12 preferably stores, in the memory 5, first association data 41c, in which the tool information TF including the selected tool type TT and the third identifier 544i of the selected virtual attachment surface 614m are associated with each other.

In the example illustrated in FIG. 32, in response to the selection of one tool type TT from the above-described list LT, basic data of the tool information TF is determined. In the example illustrated in FIG. 32, the basic data includes the tool name Tn and the machined part PP. The basic data may include a nominal size or a nominal diameter. The basic data may also include a suffix for distinguishing between same types of tool.

In response to the input or selection of the tool type TT, the processor 12 display, on the display device 15, a second image IM2 including an image for receiving input of the tool feature data TC. More specifically, in the example illustrated in FIG. 32, the tool type TT is input or selected via the input device 16, and an operation button 158 (more specifically, a digital tool preset button 158b), which is displayed on the display device 15, is operated via the input device 16. Thus, the processor 12 displays, on the display device 15, the second image IM2 including the image for receiving the input of the tool feature data TC (see FIG. 33).

In the example illustrated in FIG. 33, the second image IM2 (more specifically, the image for receiving the input of the tool feature data TC) includes an input field Q1 for receiving input of the cutting edge angle. Alternatively or additionally, the second image IM2 may include an input field Q2 for receiving input of the tool width. Alternatively or additionally, the second image IM2 includes at least one (or all) of an input field Q3 for receiving rotation direction information (that is, rotation direction information of a workpiece) and/or input of tool direction information, an input field Q4 for receiving input of an R value of the cutting edge, and an input field Q5 for receiving input of a cutting angle.

Alternatively, as illustrated in FIG. 24, the second image IM2 (more specifically, the image for receiving the input of tool feature data TC) may include an input field Q6 for receiving input of a tool diameter. Additionally, the second image IM2 may include an input field Q7 for receiving input of the R value of a corner portion of the tool tip end.

Alternatively, as illustrated in FIG. 27, the second image IM2 (more specifically, the image for receiving the input of tool feature data TC) may include an input field Q7 for receiving input of the grooving depth corresponding length VL. Additionally, the second image IM2 may include an input field Q8 for receiving input of a cutting edge width. Alternatively or additionally, the second image IM2 may include the input field Q2 for receiving the input of the tool width and/or the input field Q4 for receiving the input of the R value of the cutting edge.

In the example illustrated in FIG. 33, in addition to the image for receiving the input of the tool feature data TC, the second image IM2 includes an image of an operation button 157 (more specifically, an image of an OK button 157b) for starting a selection process of the specific holding unit model (more specifically, a selection process of the specific holder model or a selection process of the specific holder model and the specific socket model) and a derivation process of the recommendation value RV of the above-described protrusion length.

In response to an operation on the operation button 157, which is displayed on the display device 15, the processor 12 selects a specific holding unit model 3s from among the plurality of holding unit models 3, which are stored in the memory 5, based on the above-described tool information TF, and also derives the recommendation value RV of the protrusion length L2 of the specific tool model 2s with respect to the specific holding unit model 3s.

Further, as illustrated in FIG. 34, by executing the arithmetic program 59 (more specifically, the display program 59c), which is stored in the memory 5, the processor 12 simultaneously displays, on the display device 15, (1) the recommendation value RV, which has been derived, based on the above-described tool information TF, of the protrusion length L2, and (2) an image 156, which indicates the shape of the assembly model AM. It is to be noted that the image 156, which indicates the shape of the assembly model AM, is an image in which the specific tool model 2s and the specific holding unit model 3s are used in combination so that the protrusion length L2 is the above-described recommendation value RV.

By executing the arithmetic program 59 (more specifically, the display program 59c), which is stored in the memory 5, the processor 12 may simultaneously display, on the display device 15, (1) the above-described recommendation value RV, (2) the image 156, which indicates the shape of the above-described assembly model AM, and (3) the identifier 501i for identifying the specific holding unit model 3s, which has been selected, based on the tool information TF. Further, by executing the arithmetic program 59 (more specifically, the display program 59c), which is stored in the memory 5, the processor 12 may simultaneously display, on the display device 15, (1) the above-described recommendation value RV, (2) the image 156, which indicates the shape of the above-described assembly model AM, (3) the identifier 501i for identifying the above-described specific holding unit model 3s, and (4) the tool feature data TC (for example, the tool feature data TC including at least one of numerical data of the cutting edge angle, numerical data of the tool diameter, and numerical data of the tool width).

Further, by executing the arithmetic program 59 (more specifically, the display program 59c), which is stored in the memory 5, the processor 12 may display, on the display device 15, the above-described second recommendation value RV2, in addition to the above-described recommendation value RV. It is to be noted that the second recommendation value RV2 is a recommendation value of the protrusion length L3 of the cutting edge of the specific tool model 2s from the reference position of the specific holding unit model 3s in the direction perpendicular to the longitudinal direction of the specific tool model 2s.

In the example illustrated in FIG. 34, by executing the display program 59c, which is stored in the memory 5, the processor 12 displays, on the display device 15, the recommendation value RV, which has been derived, based on the above-described tool information TF, of the protrusion length L2 in a format to be editable by an operator.

In the example illustrated in FIG. 34, the buttons 153 (more specifically, the plus button 153p and the minus button 153n) for changing the recommendation value RV are displayed on the display device 15. In the example illustrated in FIG. 34, whenever the plus button 153p, which is displayed on the display device 15, is operated, the protrusion length L2 of the specific tool model 2s with respect to the specific holding unit model 3s is increased by a numerical value indicated in a display field Q9 of a movement amount. In this manner, the protrusion length L2 is changed from the recommendation value RV to the compensation value MV, which is larger than the recommendation value RV. For example, in the example illustrated in FIG. 34, in a case where the plus button 153p, which is displayed on the display device 15, is operated five times, the protrusion length L2 is changed from the recommendation value RV ("52 mm" in the example illustrated in FIG. 34) to the compensation value ("57 mm").

Further, whenever the minus button 153n, which is displayed on the display device 15, is operated, the protrusion length L2 of the specific tool model 2s with respect to the specific holding unit model 3s is reduced by a numerical value indicated in the display field Q9 of the movement amount.

In the example illustrated in FIG. 34, the operation on either the plus button 153p or the minus button 153n changes the value of the protrusion length L2 from the recommendation value RV to the compensation value MV. Alternatively, the numerical value is directly input into a display field Q10, which is for the numerical value of the protrusion length L2, so that the value of the protrusion length L2 may be changed from the recommendation value RV to the compensation value MV, which corresponds to the numerical value that has been input.

In the example illustrated in FIG. 34, by executing the display program 59c, which is stored in the memory 5, the processor 12 displays, on the display device 15, a change operation portion 154 for changing the specific holding unit model 3s, which has been selected by the processor 12, to another holding unit model. In response to an operation on the change operation portion 154, the processor 12 sets such another holding unit model to the specific holding unit model after change. In a case where the change operation portion 154 is provided, the selection of the specific holding unit model 3s by an operator is allowed. Thus, the degree of freedom in selecting the specific holding unit model 3s is improved. By executing the display program 59c, which is stored in the memory 5, the processor 12 may display, on the display device 15, a first change operation portion 154a for changing the specific holder model that has been selected by the processor 12 to another holder model and a second change operation portion 154b for changing the specific socket model that has been selected by the processor 12 to another socket model.

By executing the display program 59c, which is stored in the memory 5, the processor 12 displays, on the display device 15, the image 156, which indicates the shape of the assembly model AM (see FIG. 34). Further, in response to a change of the protrusion length L2 from the recommendation value RV to the above-described compensation value MV, the processor 12 automatically changes the shape of the assembly model AM, which is displayed on the display device 15. More specifically, in response to the change of the above-described protrusion length L2 from the recommendation value RV to the above-described compensation value MV, the processor 12 changes the shape of the assembly model AM from a first shape SH1 (see FIG. 34) in which the specific tool model 2s and the specific holding unit model 3s are used in combination so that the protrusion length L2 is the recommendation value RV to a second shape SH2 (see FIG. 35) in which the specific tool model 2s and the specific holding unit model 3s are used in combination so that the protrusion length L2 is the compensation value MV.

Further, in response to an operation on the change operation portion 154, the processor 12 changes the specific holding unit model 3s, which has been selected by the processor 12, to another holding unit model, and displays, on the display device 15, the holding unit model after change. Further, in response to a change of the specific holding unit model 3s to another holding unit model, the processor 12 changes the shape of the assembly model AM (more specifically, the shape of the specific holding unit model included in the assembly model AM), which is displayed on the display device 15.

After the shape of the assembly model AM is decided, the operator closes a tool preset window. FIG. 36 illustrates a third image IM3 to be displayed after the shape of the assembly model AM is decided and the second image IM2 is closed. In the example illustrated in FIG. 36, the numerical value of the tool feature data TC that has been input is included in the third image IM3. Further, in the example illustrated in FIG. 36, the third image IM3 includes the identifier 531i for identifying the specific tool model 2s, which has been set, based on the above-described tool information TF.

### (Calculation of Model Tool Length L1)

The arithmetic program 59, which is stored in the memory 5, is executed by the processor 12, and thus the processor 12 (more specifically, the model tool length calculation unit 125) may calculate the model tool length L1 (more specifically, the distance from the model reference point F0 to the tip end 2e of the specific tool model 2s), based on the recommendation value RV of the above-described protrusion length L2 (or the compensation value MV of the protrusion length L2), the shape of the specific holding unit model 3s, and position data of the model reference point F0 (see FIG. 5), which is stored in the memory 5. The model tool length L1, which has been calculated by the processor 12, is stored in the memory 5.

### (Data Transmission to Machine Tool 6)

As illustrated in FIG. 18, the communication circuit 13 of the machining simulation apparatus 1A may transmit, to the machine tool 6, either data indicating the recommendation value RV of the protrusion length L2 or data indicating the compensation value MV, which has been compensated from the recommendation value RV. Alternatively or additionally, the communication circuit 13 of the machining simulation apparatus 1A may transmit, to the machine tool 6, data indicating the model tool length L1, which has been calculated, based on the recommendation value RV, the compensation value MV, or the like.

Alternatively or additionally, the communication circuit 13 of the machining simulation apparatus 1A may transmit, to the machine tool 6, the shape data of the specific tool model 2s and the shape data of the specific holding unit model 3s. Further, the communication circuit 13 of the machining simulation apparatus 1A may transmit the shape data of the assembly model AM to the machine tool 6.

Further, the communication circuit 13 of the machining simulation apparatus 1A may transmit, to the machine tool 6, the above-described first association data 41c (in other words, the first association data 41c, in which the tool information TF, which has been input or selected via the input device 16, and the third identifier 544i of the virtual attachment surface 614m are associated with each other).

### (Machine Tool 6)

Subsequently, the machine tool 6 in the first embodiment will be described with reference to FIGs. 1 to 38.

In the example illustrated in FIG. 2, the machine tool 6 includes: a data acquisition unit 66 (more specifically, a second communication circuit 66a), which acquires data from the machining simulation apparatus 1A; the support 61 (more specifically, the turret 62), which supports the tool 7 via the tool holding unit 8; a movement device 64 for moving a tool (more specifically, the movement device 64 for moving the support 61); the workpiece holding device 90; and the control unit UT.

The data acquisition unit 66 (more specifically, the second communication circuit 66a) acquires data from the machining simulation apparatus 1A. The data acquisition unit 66 (more specifically, the second communication circuit 66a) may acquire, from the machining simulation apparatus 1A, either the recommendation value RV of the above-described protrusion length L2 or the compensation value MV, which has been compensated from the recommendation value RV. Alternatively or additionally, the data acquisition unit 66 (more specifically, the second communication circuit 66a) may acquire the above-described model tool length L1 from the machining simulation apparatus 1A. Further, the data acquisition unit 66 (more specifically, the second communication circuit 66a) may acquire the data of the specific tool model 2s and the data of the specific holding unit model 3s from the machining simulation apparatus 1A, or may acquire the data of the above-described assembly model AM. Further, the data acquisition unit 66 (more specifically, the second communication circuit 66a) may acquire, from the machining simulation apparatus 1A, the third identifier 544i for identifying a specific attachment surface 614s of the support 61, to which the assembly corresponding to the above-described assembly model AM is to be attached. The data that has been acquired by the machine tool 6 from the machining simulation apparatus 1A is stored in a second memory 67.

The movement device 64 moves the tool 7, which is for machining a workpiece W. The movement device 64 moves the tool 7, the tool holding unit 8 for holding the tool 7, and the support 61 (for example, the turret 62) for supporting the tool holding unit 8 one-dimensionally, two-dimensionally, or three-dimensionally.

As illustrated in FIG. 2, the movement device 64 may include a first movement device 64a, which moves the support 61 for supporting the tool 7 via the tool holding unit 8 in a first direction DR1, which is parallel to the horizontal plane. Additionally, the movement device 64 may include a second movement device 64b, which moves the support 61 in a second direction DR2 (more specifically, Z-axis direction), which is parallel to the horizontal plane. Further, the movement device 64 may include a third movement device 64c, which changes the height of the support 61.

The workpiece holding device 90 includes: for example, the gripper 94, which holds the workpiece; the chuck 93, to which the gripper 94 is attached; and a rotation drive device 92, which rotates the chuck 93 around a first axis AX.

Further, in a case where the machine tool 6 includes the turret 62, the machine tool 6 includes a second rotation drive device 63, which rotates the turret 62 around a second axis AX2. The machine tool 6 may also include a third rotation drive device that rotates the tool 7 around a tool axis.

The control unit UT controls to-be-controlled devices. More specifically, by transmitting a control command to each of the plurality of to-be-controlled devices (examples including the rotation drive device 92, the movement device 64, and the second rotation drive device 63), the control unit UT controls each of the to-be-controlled devices. The control unit UT may be disposed to be distributed in a plurality of locations. In other words, the control unit may be divided into a plurality of sub units capable of communicating with each other.

In the example illustrated in FIG. 37, the machine tool 6 (more specifically, the control unit UT) includes: a second processor 65; the data acquisition unit 66 (more specifically, the second communication circuit 66a); the second memory 67; and a second display device 68. Additionally, the machine tool 6 (more specifically, the control unit UT) may include a second input device 682. The second input device 682 may be incorporated in the second display device 68 (more specifically, the second display device 68 may be a display provided with a touch panel in which the second input device 682 is incorporated). Alternatively or additionally, the machine tool 6 may include a second input device (examples including a button, a switch, a lever, a pointing device, and a keyboard) provided separately from the second display device 68.

It is to be noted that the second processor 65 may be included in the control unit UT, which generates a control command to be transmitted to a drive unit of the machine tool. Alternatively, the second processor 65 may be provided separately from the control unit UT.

In the example illustrated in FIG. 37, the second processor 65, the second communication circuit 66a, the second memory 67, and the second display device 68 and/or the second input device 682 are connected with one another through a bus 69. The second processor 65 includes at least one processor 65a (for example, at least one CPU).

The second memory 67 is a storage medium to be readable by the second processor 65. The second memory 67 may be, for example, a non-volatile or volatile semiconductor memory such as a RAM, a ROM, a flash memory, may be a magnetic disk, or may be a memory in any other format. The second memory 67 stores arithmetic programs 671 (for example, a machining arithmetic program 671a and a second display program 671b), the machining program 58, and data 673.

By executing the machining program 58, which is stored in the second memory 67, the control unit UT (more specifically, the second processor 65) generates a control command to be transmitted to each of the plurality of to-be-controlled devices (examples including the rotation drive device 92, the movement device 64, and the second rotation drive device 63). The to-be-controlled devices that receive the control command operate, and thus the workpiece W is machined by the tool 7. It is to be noted that herein, the control unit UT (more specifically, the second processor 65) executing the machining program 58 encompasses the control unit UT (more specifically, the second processor 65) executing the machining program 58 via the machining operation program 671a. In other words, the second processor 65 executes the machining operation program 671a, so that the machining program 58 may be processed (in other words, interpreted) by the second processor 65. Further, the second processor 65 generates a control command to be transmitted to each of the plurality of to-be-controlled devices, based on the processing (in other words, based on the interpretation).

By executing the second display program 671b, which is stored in the second memory 67, the second processor 65 displays, on the second display device 68, an instruction image IM4, which has been created, based on the data that has been acquired by the data acquisition unit 66. In the example illustrated in FIG. 38, the instruction image IM4 includes (1) either the recommendation value RV of the protrusion length L2 of the specific tool model 2s with respect to the specific holding unit model 3s or the compensation value MV, which has been compensated from the recommendation value, and (2) an image 689, which indicates the shape of the above-described assembly model AM.

The operator refers to the instruction image IM4, and attaches the tool 7 to the tool holding unit 8 so that the protrusion length N2 of the tool 7 with respect to the tool holding unit 8 (see FIG. 4) is either the above-described recommendation value RV or the above-described compensation value MV. Thus, it becomes possible to prepare an assembly of the tool holding unit 8 and the tool 7 in a state close to the condition on which the machining simulation has been performed. Then, such an assembly is attached to the support 61 (for example, the turret 62) of the machine tool 6.

In the example illustrated in FIG. 38, by executing the second display program 671b, which is stored in the second memory 67, the second processor 65 may display, on the second display device 68, the third identifier 544i for identifying the specific attachment surface 614s to which an assembly of the tool holding unit 8 and the tool 7 is to be attached. In this case, the operator is able to easily recognize to which attachment surface of the plurality of attachment surfaces 614 of the support 61 the assembly of the tool holding unit 8 and the tool 7 is to be attached.

In the example illustrated in FIG. 38, the instruction image IM4, which is displayed on the second display device 68, includes (1) either the above-described recommendation value RV or the above-described compensation value MV, (2) the image 689, which indicates the shape of the above-described assembly model AM, and (3) the third identifier 544i for identifying the specific attachment surface 614s to which the assembly corresponding to the above-described assembly model AM is to be attached. In other words, by executing the second display program 671b, which is stored in the second memory 67, the second processor 65 simultaneously displays, on the second display device 68, (1) either the above-described recommendation value RV or the above-described compensation value MV, (2) the image 689, which indicates the shape of the above-described assembly model AM, and (3) the above-described third identifier 544i.

The machine tool 6 in the first embodiment receives data from the machining simulation apparatus 1A, which makes a highly accurate interference check. By making the highly accurate interference check beforehand, it becomes possible to omit or simplify the interference check to be made by using the machine tool 6. By omitting or simplifying the interference check in a machining site, the operation rate of the machine tool 6 can be improved. Further, the workload of the operator in the machining site is reduced.

Further, in the machine tool 6 in the first embodiment, the instruction image IM4 is displayed including either the recommendation value RV or the compensation value MV of the protrusion length L2. Thus, it becomes possible to prepare the assembly of the tool holding unit 8 and the tool 7 in a state close to the condition on which the machining simulation has been performed. This facilitates the setup work performed in the machining site. As a result, the operation rate of the machine tool 6 can be further improved. In addition, the workload of the operator in the machining site is further reduced.

### (Machine Tool System 100)

The machine tool system 100 in the first embodiment will be described with reference to FIGs. 1 to 40.

As illustrated in FIG. 39, the machine tool system 100 in the first embodiment includes: the machining simulation apparatus 1A; and the machine tool 6. The machining simulation apparatus 1A and the machine tool 6 are preferably connected to be communicable with each other through a network 101. The network 101 may be an in-house network, or may include an external network (for example, the Internet).

Alternatively, as illustrated in FIG. 40, the machine tool system 100 may include the machine tool 6, and the machining simulation apparatus 1A may be included in the machine tool 6. In this case, the second processor 65 of the machine tool 6 may function as the processor 12 of the machining simulation apparatus 1A. Alternatively, the second processor 65 of the machine tool 6 and the processor 12 of the machining simulation apparatus 1A may work in cooperation with each other. Similarly, the above-described second communication circuit 66a, the above-described second memory 67, the above-described second display device 68, and the above-described second input device 682 may respectively function as the above-described communication circuit 13, the above-described memory 5, the above-described display device 15, and the above-described input device 16.

The specific configurations of the machining simulation apparatus 1A and the machine tool 6 have been described, and repeated description of the specific configurations of the machining simulation apparatus 1A and the machine tool 6 will be omitted.

The machine tool system 100 in the first embodiment has the similar effects to those of the machining simulation apparatus 1A in the first embodiment and/or the machine tool 6 in the first embodiment.

### (Machining Simulation Method and Arithmetic Program 59)

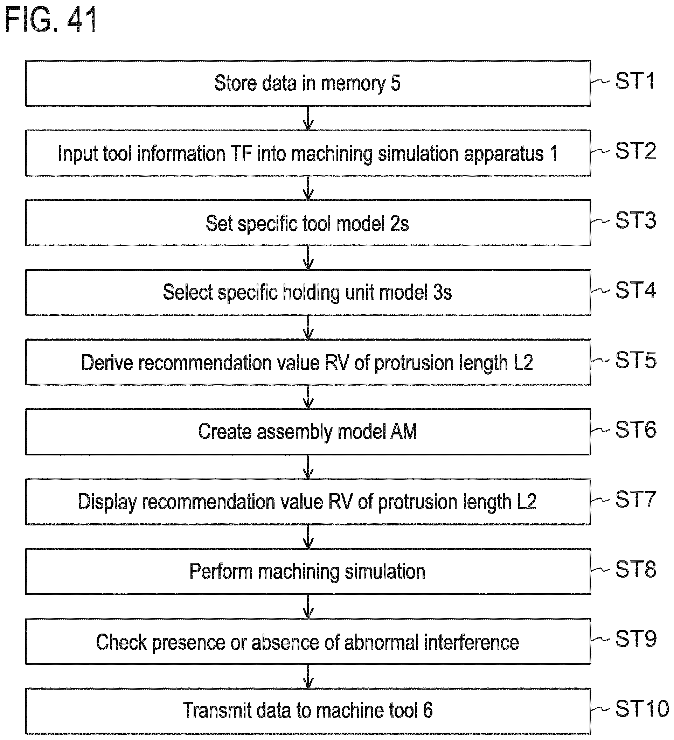

A machining simulation method in the first embodiment will be described with reference to FIGs. 1 to 41. FIG. 41 is a flowchart of the machining simulation method in the first embodiment, illustrating an example of the machining simulation method.

The machining simulation method in the first embodiment is performed by using the machining simulation apparatus 1A in the first embodiment or any other machining simulation apparatus. The machining simulation apparatus 1A in the first embodiment has been described, and repeated description of the machining simulation apparatus 1A in the first embodiment will be omitted.

In a first step ST1, data is stored in the memory 5. The first step ST1 is a storage step. It is to be noted that in a case where necessary data is already stored in the memory 5, the first step ST1 is omitted.

The data stored in the memory 5 in the storage step includes data of the holding unit models 3, which are obtained by respectively modeling the plurality of tool holding units 8 (more specifically, the data 51a of the plurality of holder models 31 and the data 52a of the plurality of socket models 32).

The data stored in the memory 5 in the storage step may include the plurality of tool models 2, which are obtained by respectively modeling the plurality of tools 7 (more specifically, the data 53a of the plurality of tool models 2).

Further, the data stored in the memory 5 in the storage step may include the support model 61m, which is obtained by modeling the above-described support 61 (more specifically, the data 54a of the support model 61m), the plurality of constituent models 9m, which are obtained by respectively modeling at least some of elements that constitute the machine tool 6 (specifically, the data 55a of the plurality of constituent models 9m), and the workpiece model Wm, which is obtained by modeling the workpiece W before machining (more specifically, the data 57a of the workpiece model Wm).

Further, in the storage step, the above-described file 43 (see FIGs. 10, 12, and 13) may be stored in the memory 5.

In a second step ST2, the tool information TF is input into either the machining simulation apparatus 1 or the machine tool 6. The second step ST2 is a tool information input step.

The tool information TF may include the tool identifier 70i for identifying the tool. In this case, the tool information input step includes inputting the tool identifier 70i for identifying the tool into either the machining simulation apparatus 1 or the machine tool 6.

Alternatively or additionally, the tool information TF may include tool type TT and tool feature data TC. In this case, the tool information input step includes inputting the tool type TT and the tool feature data TC into the machining simulation apparatus 1. In the example illustrated in FIG. 21, the tool information input step includes inputting the tool type TT and the tool feature data TC including the cutting edge angle into either the machining simulation apparatus 1 or the machine tool 6. In the example illustrated in FIG. 22, the tool information input step includes inputting the tool type TT and the tool feature data TC including the tool width into either the machining simulation apparatus 1 or the machine tool 6. In the example illustrated in FIG. 25, the tool information input step includes inputting the tool type TT and the tool feature data TC including the tool diameter into either the machining simulation apparatus 1 or the machine tool 6. In the example illustrated in FIG. 28, the tool information input step includes inputting the tool type TT and the tool feature data TC including the grooving depth corresponding length VL into either the machining simulation apparatus 1 or the machine tool 6.

As illustrated in FIG. 32, the tool information input step may include displaying, on the display device 15, the first image IM1 including an image for receiving input or selection of the tool type TT. Further, as illustrated in FIG. 33, the tool information input step may include displaying, on the display device 15, the second image IM2 including an image for receiving input of the tool feature data TC in response to the input or selection of the tool type TT via the input device 16.

The tool information input step includes storing, in the memory 5, the tool information TF (for example, either the tool type TT and the tool feature data TC or the tool identifier 70i), which has been input or selected via the input device 16. As illustrated in FIG. 32, in a case where an image in which the third identifier 544i for identifying the virtual attachment surface 614m of the support model 61m and the tool type TT are associated with each other is displayed on the display device 15, the tool information input step may include storing, in the memory 5, the first association data 41c in which the tool information TF, which has been input or selected via the input device 16, and the third identifier 544i of the virtual attachment surface 614m are associated with each other.

In a third step ST3, the specific tool model 2s, which is obtained by modeling the tool, is set, based on the tool information TF, which has been input into either the machining simulation apparatus 1 or the machine tool 6. The third step ST3 is a specific tool model setting step.

The specific tool model setting step may include automatically selecting a specific tool model 2s, which conforms to the tool information TF, from among the plurality of tool models 2, which are stored in the memory 5, based on the tool information TF. Such an automatic selection is made by the processor 12.

Alternatively, the specific tool model setting step may include automatically creating the specific tool model 2s, which conforms to the tool information TF. Such automatic creation is made by the processor 12.

The specific tool model 2s, which has been set by the processor 12, based on the tool information TF (more specifically, the data of the specific tool model 2s, which has been selected or created by the processor 12, based on the tool information TF), is stored in the memory 5.

The procedure, by the processor 12, for setting the specific tool model has been described in the description of the machining simulation apparatus 1A in the first embodiment, and repeated description of the procedure will be omitted.

In a fourth step ST4, the specific holding unit model 3s is selected, based on the tool information TF, which has been input into either the machining simulation apparatus 1 or the machine tool 6. The fourth step ST4 is a specific holding unit model selection step. The specific holding unit model selection step includes selecting, by the processor 12, a specific holding unit model 3s from among the plurality of holding unit models 3, which are stored in the memory 5, based on the tool information TF (for example, the tool type TT and the tool feature data TC).

The procedure, by the processor 12, for selecting the specific holding unit model 3s has been described in the description of the machining simulation apparatus 1A in the first embodiment, and repeated description of such a procedure will be omitted.

In a fifth step ST5, the recommendation value RV of the protrusion length L2 of the specific tool model 2s with respect to the specific holding unit model 3s is derived, based on the tool information TF, which has been input into either the machining simulation apparatus 1 or the machine tool 6. The fifth step ST5 is a recommendation value derivation step.

As illustrated in FIG. 21, in a case where the tool type TT included in the tool information TF is the first type of turning tool, the processor 12 derives the recommendation value RV of the protrusion length L2 of the specific tool model 2s with respect to the specific holding unit model 3s, based on at least the cutting edge angle of such a turning tool. As illustrated in FIG. 22, in a case where the tool type TT included in the tool information TF is the second type of turning tool, the processor 12 derives the recommendation value RV of the protrusion length L2 of the specific tool model 2s with respect to the specific holding unit model 3s, based on at least the tool width of such a turning tool. As illustrated in FIG. 25, in a case where the tool type TT is a rotating tool, the processor 12 derives the recommendation value RV of the protrusion length L2 of the specific tool model 2s with respect to the specific holding unit model 3s, based on at least the tool diameter of such a rotating tool. Further, as illustrated in FIG. 28, in a case where the tool type TT is a grooving tool, the processor 12 derives the recommendation value RV of the protrusion length L2 of the specific tool model 2s with respect to the specific holding unit model 3s, based on at least the grooving depth corresponding length VL of such a grooving tool. It is to be noted that the recommendation value RV, which has been derived, of the protrusion length L2 is stored in the memory 5.

The procedure, by the processor 12, for deriving the recommendation value RV of the protrusion length L2 has been described in the description of the machining simulation apparatus 1A in the first embodiment, and repeated description of the procedure will be omitted.

In a sixth step ST6, the assembly model AM is created. The sixth step ST6 is an assembly model creation step. The assembly model creation step includes creating the assembly model AM in which the specific tool model 2s and the specific holding unit model 3s are used in combination so that the protrusion length L2 is the recommendation value RV. The assembly model AM is created by the processor 12.

In a seventh step ST7, the recommendation value RV of the protrusion length L2 is displayed on the display device 15. The seventh step ST7 is a display step. As illustrated in FIGs. 21, 22, 25, and 28, the display step may include simultaneously displaying. on the display device 15, the recommendation value RV of the protrusion length L2 and the above-described second recommendation value RV2.

As illustrated in FIG. 34, the display step (the seventh step ST7) may include displaying, on the display device 15, the recommendation value RV, which has been derived, based on the tool information TF, of the protrusion length L2 in a format to be editable by an operator. In this case, in response to a change in the numerical value of the recommendation value via the input device 16, the processor 12 changes the recommendation value RV of the above-described protrusion length L2 to the compensation value MV. Further, the processor 12 creates the assembly model AM, in which the specific tool model 2s and the specific holding unit model 3s are used in combination so that the protrusion length L2 is the compensation value MV.

As illustrated in FIG. 34, the display step (the seventh step ST7) may include displaying the image 156, which indicates the shape of the assembly model AM, on the display device 15. In response to the change of the above-described protrusion length L2 from the above-described recommendation value RV to the above-described compensation value MV, the shape of the assembly model AM, which is displayed on the display device 15, may be automatically changed.

As illustrated in FIG. 34, the display step (the seventh step ST7) may include simultaneously displaying, on the display device 15, (1) either the above-described recommendation value RV or the above-described compensation value MV, and (2) the image 156, which indicates the shape of the assembly model AM. Further, the display step (the seventh step ST7) may include simultaneously displaying, on the display device 15, (1) either the above-described recommendation value RV or the above-described compensation value MV, (2) the image 156, which indicates the shape of the above-described assembly model AM, (3) the identifier 501i for identifying the specific holding unit model 3s, which has been selected, based on the tool information TF, and/or (4) the tool feature data TC (for example, the tool feature data TC including at least one of the numerical data of the cutting edge angle, the numerical data of the tool diameter, and the numerical data of the tool width).

It is to be noted that the display step (the seventh step ST7) may be omitted.

In an eighth step ST8, the machining simulation is performed. The eighth step ST8 is a machining simulation performing step. The machining simulation performing step includes virtually machining a workpiece model Wm. More specifically, in the machining simulation performing step, by the processor 12 virtually executing the machining program 58, virtually machining the workpiece model Wm is included, by using the plurality of constituent models 9m, which are obtained by respectively modeling at least some of the elements that constitute the machine tool 6, the workpiece model Wm, which is obtained by modeling the workpiece W before machining, and the assembly model AM.

The machining simulation performing step may include generating the movement path data of the specific tool model 2s. Further, as illustrated in FIG. 17, the machining simulation performing step may include displaying, on the display device 15, a moving image in which the specific tool model 2s and the plurality of models (3s, 61m, 2-2, and 3-2), which move together with the specific tool model 2s, move with respect to the workpiece model Wm along the path specified by the above-described movement path data. In such a moving image, the workpiece model Wm is machined in a pseudo manner by the specific tool model 2s.

In a ninth step ST9, the presence or absence of abnormal interference is checked in the machining simulation. The ninth step ST9 is an interference check step. The interference check step is performed in parallel with the machining simulation performing step (the eighth step ST8).

In the interference check step (the ninth step ST9), in the above-described machining simulation, the processor 12 checks whether the above-described assembly model AM abnormally interferes with any of the plurality of constituent models 9m or the workpiece model Wm. It is to be moted that the assembly model AM is a model in which the specific tool model 2s and the specific holding unit model 3s are used in combination so that the protrusion length L2 is either the recommendation value RV or the compensation value MV, which has been compensated from the recommendation value RV. Additionally, the interference check step (the ninth step ST9) may include checking, by the processor 12, whether the model (for example, the support model 61m, another holding unit model 3-2, which is virtually attached to the support model 61m, or another tool model 2-2) that moves together with the assembly model AM abnormally interferes with any of the plurality of constituent models 9 or the workpiece model Wm.

The interference check step (the ninth step ST9) may include checking, by the processor 12, whether the interference check region RG (see FIG. 29 or FIG. 30) abnormally interferes with any of the plurality of constituent models 9m or the workpiece model Wm.

The interference check step (the ninth step ST9) may include displaying, on the display device 15, a message indicating the presence of abnormal interference, in a case where the processor 12 determines the "presence" of an abnormal interference.

In a tenth step ST10, data is transmitted from the communication circuit 13 of the machining simulation apparatus 1 to the machine tool 6. The tenth step ST10 is a data transmission step.

The data transmission step includes transmitting the data indicating either the recommendation value RV of the protrusion length L2 or the data indicating the compensation value MV, which has been compensated from the recommendation value RV, to the machine tool 6 from the communication circuit 13 of the machining simulation apparatus 1. Alternatively or additionally, the data transmission step may include transmitting data indicating the model tool length L1, which has been calculated, based on the recommendation value RV, the compensation value MV, or the like, to the machine tool 6 from the communication circuit 13 of the machining simulation apparatus 1.

Alternatively or additionally, the data transmission step may include transmitting the shape data of the specific tool model 2s and the shape data of the specific holding unit model 3s to the machine tool 6 from the communication circuit 13 of the machining simulation apparatus 1. Further, the data transmission step may include transmitting the shape data of the assembly model AM to the machine tool 6 from the communication circuit 13 of the machining simulation apparatus 1.

Further, the data transmission step may include transmitting the above-described first association data 41c (in other words, the first association data 41c in which the tool information TF, which has been input or selected via the input device 16, and the third identifier 544i of the virtual attachment surface 614m are associated with each other) to the machine tool 6 from the communication circuit 13 of the machining simulation apparatus 1.

It is to be noted that in a case where the above-described third step ST3 to the above-described ninth step ST9 are performed by the machine tool 6, the tenth step ST10 (the data transmission step) may be omitted.

The program in the first embodiment (more specifically, the arithmetic program 59) is a program for causing either the machining simulation apparatus 1 or the machine tool 6 to perform the machining simulation method in the first embodiment.

More specifically, the program (more specifically, the arithmetic program 59) in the first embodiment is a program for causing either the machining simulation apparatus 1 or the machine tool 6 to perform the machining simulation method including steps of: (1) setting a specific tool model 2s, which is obtained by modeling a tool, based on the tool information TF, which has been input into either the machining simulation apparatus 1 or the machine tool 6 (in other words, the above-described third step ST3); (2) selecting a specific holding unit model 3s from among the plurality of holding unit models 3, which are stored in the memory 5, and which are obtained by respectively modeling a plurality of tool holding units 8, based on the tool information TF (in other words, the above-described fourth step ST4); (3) deriving a recommendation value RV of the protrusion length L2 of the specific tool model 2s with respect to the specific holding unit model 3s, based on the tool information TF (in other words, the above-described fifth step ST5); (4) creating an assembly model AM in which the specific tool model 2s and the specific holding unit model 3s are used in combination so that the protrusion length L2 is either the recommendation value RV or a compensation value MV, which has been compensated from the recommendation value RV (in other words, the above-described sixth step ST6); (5) virtually performing the machining program 58 to perform a machining simulation of virtually machining the workpiece model Wm, by using a plurality of constituent models 9m, which are obtained by respectively modeling at least some of elements that constitute the machine tool 6, the workpiece model Wm, which is obtained by modeling the workpiece W before machining, and the assembly model AM (in other words, the above-described eighth step ST8); and (6) checking whether the assembly model AM abnormally interferences with any of the plurality of constituent models 9m or the workpiece model Wm in the machining simulation (in other words, the above-described ninth step ST9).

Additionally, the program in the first embodiment (more specifically, the arithmetic program 59) may be a program for causing the machining simulation apparatus 1 to perform the machining simulation method including the above-described tool information input step (the second step ST2), the above-described display step (the seventh step ST7), and/or the above-described data transmission step (the tenth step ST10).

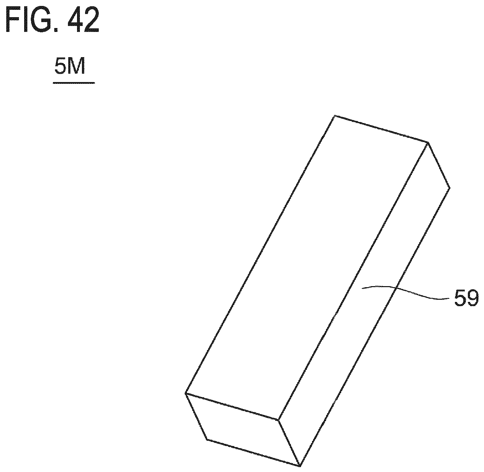

Further, the memory 5 in the first embodiment may be a non-volatile storage medium in which the above-described program (more specifically, the arithmetic program 59) is recorded. The non-volatile storage medium in which the above-described program (more specifically, the arithmetic program 59) is recorded may be a portable storage medium 5M, as illustrated in FIG. 42.

The machining simulation method, the program (more specifically, the arithmetic program 59) in the first embodiment or the non-volatile storage medium in which the program (more specifically, the arithmetic program 59) is recorded exhibits similar effects to those of the machining simulation apparatus 1A in the first embodiment.

The present invention is not limited to each of the above-described embodiments or each modification, and obviously, each embodiment or each modification can be appropriately modified or changed within the scope of the technical concept of the present invention. Further, various techniques used in each embodiment or each modification is also applicable to other embodiments or other modifications as long as there is no technical contradiction. Furthermore, any additional configuration in each embodiment or each modification can be omitted as appropriate.

### Reference Signs List

1, 1A ... Machining simulation apparatus, 2 ... Tool model, 2-2 ... Another tool model, 2e ... Tip end of tool model, 2s ... Specific tool model, 3 ... Holding unit model, 3-2 ... Another holding unit model, 3s ... Specific holding unit model, 5 ... Memory, 5M ... Memory medium, 6 ... Machine tool, 6m ... Machine tool model, 7 ... Tool, 7-2 ... Another tool, 7e ... Tip end of tool, 7v ... Grooving tool, 8 ... Tool holding unit, 8-2 ... Another tool holding unit, 9 ... Constituent element of machine tool, 9m ... Constituent model, 12 ... Processor, 12a ... Processor, 13 ... Communication circuit, 15 ... Display device, 16, 16a, 16b ... Input device, 17 ... Bus, 21s ... Rotating tool model, 31 ... Holder model, 31f ... First type of holder model, 31g ... Second type of holder model, 31s ... Specific holder model, 32 ... Socket model, 32s ... Specific socket model, 41a, 41b ... Association data, 41c ... First association data, 43, 43a, 43b ... File, 51 ... First database, 51a ... Data of holder model, 52 ... Second database, 52a ... Data of socket model, 53 ... Tool model storage unit, 53a ... Data of tool model, 54 ... Support model storage unit, 54a ... Data of support model, 55 ... Constituent model storage unit, 55a ... Data of constituent model, 56 ... Tool information storage unit, 57 ... Workpiece model storage unit, 57a ... Data of workpiece model, 58 ... Machining program, 59 ... Arithmetic program, 59a ... Simulation arithmetic program, 59b ... Assembly model creation program, 59c ... Display program, 60 ... Lathe, 61 ... Support, 61m ... Support model, 62 ... Turret, 62m ... Turret model, 63 ... Second rotation drive device, 64 ... Movement device, 64a ... First movement device, 64b ... Second movement device, 64c ... Third movement device, 65 ... Second processor, 65a ... Processor, 66 ... Data acquisition unit, 66a ... Second communication circuit, 67 ... Second memory, 68 ... Second display device, 69 ... Bus, 70i ... Tool identifier, 71s ... Rotating tool, 90 ... Workpiece holding device, 90m ... Workpiece holding device model, 92 ... Rotation drive device, 93 ... Chuck, 93m ... Chuck model, 94 ... Gripper, 94m ... Gripper model, 99 ... Tailstock, 99m ... Tailstock model, 100 ... Machine tool system, 101 ... Network, 121 ... Tool model setting unit, 122 ... Holding unit model selection unit, 123 ... Protrusion length derivation unit, 124 ... Assembly model creation unit, 125 ... Model tool length calculation unit, 126 ... Machining simulation unit, 152 ... Display provided with touch panel, 153 ... Button, 153n ... Minus button, 153p ... Plus button, 154 ... Change operation portion, 154a ... First change operation portion, 154b ... Second change operation portion, 156 ... Image indicating shape of assembly model, 157 ... Operation button, 157b ... OK button, 158 ... Operation button, 158b ... Digital tool preset button, 501i ... Identifier of holding unit model, 511i ... First identifier, 512s ... Shape data of holder model, 513t ... Data for specifying type of holder model, 514p ... Data for specifying reference position of holder model, 521i ... Second identifier, 522s ... Shape data of socket model, 531i ... Identifier for identifying tool model, 532s ... Shape data of tool model, 541i ... Identifier for identifying support model, 542s ... Shape data of support model, 544i ... Third identifier, 551i ... Identifier for identifying constituent model, 552s ... Shape data of constituent model, 571i ... Identifier for identifying workpiece model, 572s ... Shape data of workpiece model, 614 ... Attachment surface, 614m ... Virtual attachment surface, 614s ... Specific attachment surface, 671 ... Arithmetic program, 671a ... Machining arithmetic program, 671b ... Second display program, 673 ... Data, 682 ... Second input device, 689 ... Image indicating shape of assembly model, AM ... Assembly model, F0 ... Model reference point, G0 ... Machine origin, IM ... Image for receiving input of tool information, IM1 ... First image, IM2 ... Second image, IM3 ... Third image, IM4 ... Instruction image, LT ... List of tool types, PP ... Machined part, Q1-Q10 ... Input field, RG ... Interference check region, TC ... Tool feature data, TD ... Tool diameter, TF ... Tool information, TT ... Tool type, TW ... Tool width, Tn ... Tool name, UT ... Control unit, W ... Workpiece, Wm ... Workpiece model

## Claims

1. A machining simulation apparatus comprising:
a memory configured to store a plurality of constituent models obtained by respectively modeling at least a part of elements that constitute a machine tool, a plurality of holding unit models obtained by respectively modeling a plurality of tool holding units, a workpiece model obtained by modeling a workpiece before machining, and a machining program; and
a processor configured to
set a specific tool model obtained by modeling a tool, based on tool information,
select a specific holding unit model from among the plurality of holding unit models stored in the memory, based on the tool information,
derive a recommendation value of a protrusion length of the specific tool model with respect to the specific holding unit model, using a preset calculation formula for calculating the recommendation value of the protrusion length, based on the tool type TT and tool feature data TC included in the tool information,
create an assembly model in which the specific tool model and the specific holding unit model are used in combination for the protrusion length to be either the recommendation value or a compensation value that has been compensated from the recommendation value,
virtually execute the machining program by using the plurality of constituent models, the workpiece model, and the assembly model, and
check whether the assembly model abnormally interferes with any of the plurality of constituent models or the workpiece model,
the apparatus further comprising a display device, wherein the processor is configured to execute a display program stored in the memory to display, on the display device, the recommendation value of the protrusion length that has been derived, based on the tool information, in a format that is editable by an operator, and an image indicating a shape of the assembly model, and
in response to a change of the protrusion length from the recommendation value to the compensation value, the processor is configured to automatically change the shape of the assembly model displayed on the display device.

2. The machining simulation apparatus according to claim 1, wherein the processor automatically selects the specific holding unit model from among the plurality of holding unit models stored in the memory, based on the tool information.

3. The machining simulation apparatus according to claim 1 or 2, wherein
the tool information includes a tool type and tool feature data, and
the processor derives the recommendation value of the protrusion length, based on the tool type and the tool feature data.

4. The machining simulation apparatus according to claim 3, wherein in a case where the tool type is a first type of turning tool, the processor derives the recommendation value of the protrusion length of the specific tool model with respect to the specific holding unit model, based on at least a cutting edge angle of the turning tool.

5. The machining simulation apparatus according to claim 3 or 4, wherein in a case where the tool type is a rotating tool, the processor derives the recommendation value of the protrusion length of the specific tool model with respect to the specific holding unit model, based on at least a tool diameter of the rotating tool.

6. The machining simulation apparatus according to one of claims 3 to 5, wherein in a case where the tool type is a grooving tool, the processor derives the recommendation value of the protrusion length of the specific tool model with respect to the specific holding unit model, based on at least a grooving depth corresponding length of the grooving tool.

7. The machining simulation apparatus according to one of claims 1 to 6, wherein in a case where the specific holding unit model to be selected, based on the tool information, includes a specific holder model and a specific socket model, the processor creates the assembly model in which the specific tool model is virtually held by the specific holder model via the specific socket model.

8. A machine tool system comprising:
the machining simulation apparatus of one of claims 1 to 7;
a support configured to support the tool via a tool holding unit;
a movement device configured to move the support;
a workpiece holding device configured to hold the workpiece:
a second processor;
a second display device; and
a second memory configured to store a second display program, wherein
the second processor executes the second display program to display, on the second display device, an instruction image that has been created, based on the data that has been acquired by the data acquisition unit, and
the instruction image comprises:
either the recommendation value of the protrusion length of the specific tool model with respect to the specific holding unit model or the compensation value that has been compensated from the recommendation value; and
an image indicating a shape of the assembly model.

9. A machining simulation method comprising steps of:
setting a specific tool model obtained by modeling a tool, based on tool information that has been input into either a machining simulation apparatus or a machine tool;
selecting a specific holding unit model from among a plurality of holding unit models stored in a memory and obtained by respectively modeling a plurality of tool holding units, based on the tool information;
deriving a recommendation value of a protrusion length of the specific tool model with respect to the specific holding unit model, using a preset calculation formula for calculating the recommendation value of the protrusion length, based on the tool type TT and tool feature data TC included in the tool information;
creating an assembly model in which the specific tool model and the specific holding unit model are used in combination for the protrusion length to be either the recommendation value or a compensation value that has been compensated from the recommendation value;
virtually executing a machining program to perform a machining simulation for virtually machining a workpiece model, by using a plurality of constituent models obtained by respectively modeling at least a part of elements that constitute the machine tool, the workpiece model obtained by modeling a workpiece before machining, and the assembly model; and
checking, in the machining simulation, whether the assembly model abnormally interferences with any of the plurality of constituent models or the workpiece model,
executing a display program stored in the memory to display, on a display device, the recommendation value of the protrusion length that has been derived, based on the tool information, in a format that is editable by an operator, and an image indicating a shape of the assembly model, and
in response to a change of the protrusion length from the recommendation value to the compensation value, automatically changing the shape of the assembly model displayed on the display device.

10. A program for causing either the machining simulation apparatus of claim 1 or the machine tool of claim 8 to perform the simulation method of claim 9.

## Patentansprüche

1. Bearbeitungssimulationsvorrichtung, mit:
einem Speicher, der konfiguriert ist, um eine Vielzahl von Bestandteilsmodellen, die durch jeweilige Modellierung zumindest eines Teils der Elemente, aus denen eine Werkzeugmaschine besteht, erhalten wurden, eine Vielzahl von Halterungsmodellen, die durch jeweilige Modellierung einer Vielzahl von Werkzeughalterungen erhalten wurden, ein Werkstückmodell, das durch Modellierung eines Werkstücks vor der Bearbeitung erhalten wurde, sowie ein Bearbeitungsprogramm zu speichern; und
einem Prozessor, der konfiguriert ist, zum
Einstellen eines spezifischen Werkzeugmodells, das durch Modellierung eines Werkzeugs basierend auf Werkzeuginformationen erhalten wurde,
Auswählen eines spezifischen Halterungsmodells aus der Vielzahl von im Speicher gespeicherten Halterungsmodellen basierend auf den Werkzeuginformationen,
Ableiten eines Empfehlungswerts für die Überstandslänge des spezifischen Werkzeugmodells in Bezug auf das spezifische Halterungsmodell unter Verwendung einer voreingestellten Berechnungsformel zur Berechnung des Empfehlungswerts für die Überstandslänge basierend auf den in den Werkzeuginformationen enthaltenen Werkzeugtypen TT und den Werkzeugmerkmalsdaten TC,
Erzeugen eines Baugruppenmodells, in dem das spezifische Werkzeugmodell und das spezifische Halterungsmodell so kombiniert werden, dass die Überstandslänge entweder dem Empfehlungswert oder einem vom Empfehlungswert kompensierten Kompensationswert entspricht,
virtuelles Ausführen des Bearbeitungsprogramms unter Verwendung der Vielzahl von Bestandteilsmodellen, des Werkstückmodells und des Baugruppenmodells, und
Prüfen, ob das Baugruppenmodell eine der Vielzahl von Bestandteilsmodellen oder das Werkstückmodell abnormal beeinträchtigt,
wobei die Vorrichtung weiterhin eine Anzeigeeinrichtung aufweist, wobei der Prozessor konfiguriert ist, um ein im Speicher gespeichertes Anzeigeprogramm auszuführen, um auf der Anzeigeeinrichtung den basierend auf den Werkzeuginformationen abgeleiteten Empfehlungswert für die Überstandslänge in einem für einen Bediener bearbeitbaren Format sowie ein Bild anzugeben, das eine Form des Baugruppenmodells darstellt, und
als Reaktion auf eine Änderung der Überstandslänge vom Empfehlungswert zum Kompensationswert der Prozessor dazu konfiguriert ist, um die Form des auf der Anzeigeeinrichtung angezeigten Baugruppenmodells automatisch zu ändern.

2. Bearbeitungssimulationsvorrichtung gemäß Anspruch 1, wobei der Prozessor das spezifische Halterungsmodell automatisch aus der Vielzahl von im Speicher gespeicherten Halterungsmodellen basierend auf den Werkzeuginformationen auswählt.

3. Bearbeitungssimulationsvorrichtung gemäß Anspruch 1 oder 2, wobei
die Werkzeuginformationen einen Werkzeugtyp und Werkzeugmerkmalsdaten umfassen, und
der Prozessor den Empfehlungswert der Überstandslänge basierend auf dem Werkzeugtyp und den Werkzeugmerkmalsdaten ableitet.

4. Bearbeitungssimulationsvorrichtung gemäß Anspruch 3, wobei in einem Fall, in dem der Werkzeugtyp ein erster Typ eines Drehwerkzeugs ist, der Prozessor den Empfehlungswert für die Überstandslänge des spezifischen Werkzeugmodells in Bezug auf das spezifische Halterungsmodell basierend auf zumindest einem Schneidkantenwinkel des Drehwerkzeugs ableitet.

5. Bearbeitungssimulationsvorrichtung gemäß Anspruch 3 oder 4, wobei in einem Fall, in dem der Werkzeugtyp ein rotierendes Werkzeug ist, der Prozessor den Empfehlungswert für die Überstandslänge des spezifischen Werkzeugmodells in Bezug auf das spezifische Halterungsmodell basierend auf mindestens einem Werkzeugdurchmesser des rotierenden Werkzeugs ableitet.

6. Bearbeitungssimulationsvorrichtung gemäß einem der Ansprüche 3 bis 5, wobei in einem Fall, in dem der Werkzeugtyp ein Nutenfräser ist, der Prozessor den Empfehlungswert für die Überstandslänge des spezifischen Werkzeugmodells in Bezug auf das spezifische Halterungsmodell ableitet, basierend auf mindestens einer Länge des Nutenfräsers, die der Nuttiefe entspricht.

7. Bearbeitungssimulationsvorrichtung gemäß einem der Ansprüche 1 bis 6, wobei in einem Fall, in dem das basierend auf den Werkzeuginformationen auszuwählende spezifische Halterungsmodell ein spezifisches Haltermodell und ein spezifisches Aufnahmemodell umfasst, der Prozessor das Baugruppenmodell erstellt, in dem das spezifische Werkzeugmodell virtuell durch das spezifische Haltermodell über das spezifische Aufnahmemodell gehalten wird.

8. Werkzeugmaschinensystem, mit:
der Bearbeitungssimulationsvorrichtung gemäß einem der Ansprüche 1 bis 7;
einer Halterung, die dazu konfiguriert ist, das Werkzeug über eine Werkzeughalteeinheit zu halten;
einer Bewegungseinrichtung, die dazu konfiguriert ist, die Halterung zu bewegen;
einer Werkstückhaltevorrichtung, die konfiguriert ist, um das Werkstück zu halten;
einem zweiten Prozessor;
einer zweiten Anzeigeeinrichtung; und
einem zweiten Speicher, der konfiguriert ist, um ein zweites Anzeigeprogramm zu speichern, wobei
der zweite Prozessor das zweite Anzeigeprogramm ausführt, um auf der zweiten Anzeigeeinrichtung ein Anweisungsbild anzuzeigen, das basierend auf den von der Datenerfassungseinheit beschafften Daten erstellt wurde, und
das Anweisungsbild aufweist:
entweder den Empfehlungswert der Überstandslänge des spezifischen Werkzeugmodells in Bezug auf das spezifische Halterungsmodell oder den Kompensationswert, der aus dem Empfehlungswert kompensiert wurde; und
ein Bild, das eine Form des Baugruppenmodells angibt.

9. Bearbeitungssimulationsverfahren, mit den Schritten:
Einstellen eines spezifischen Werkzeugmodells, das durch Modellierung eines Werkzeugs basierend auf Werkzeuginformationen erhalten wurde, die entweder in eine Bearbeitungssimulationsvorrichtung oder in eine Werkzeugmaschine eingegeben wurden;
Auswählen eines spezifischen Halterungsmodells aus einer Vielzahl von Halterungsmodellen, die in einem Speicher gespeichert sind und durch jeweilige Modellierung einer Vielzahl von Werkzeughalterungen erhalten wurden, basierend auf den Werkzeuginformationen;
Ableiten eines Empfehlungswerts für eine Überstandslänge des spezifischen Werkzeugmodells in Bezug auf das spezifische Halterungsmodell unter Verwendung einer voreingestellten Berechnungsformel zur Berechnung des Empfehlungswerts für die Überstandslänge basierend auf den in den Werkzeuginformationen enthaltenen Werkzeugtypen TT und den Werkzeugmerkmalsdaten TC;
Erzeugen eines Baugruppenmodells, in dem das spezifische Werkzeugmodell und das spezifische Halterungsmodell in Kombination verwendet werden, wobei die Überstandslänge entweder der Empfehlungswert oder ein vom Empfehlungswert kompensierter Kompensationswert ist;
virtuelles Ausführen eines Bearbeitungsprogramms zur Durchführung einer Bearbeitungssimulation für die virtuelle Bearbeitung eines Werkstückmodells unter Verwendung einer Vielzahl von Teilmodellen, die durch jeweilige Modellierung zumindest eines Teils der Elemente, aus denen die Werkzeugmaschine besteht, des durch Modellierung eines Werkstücks vor der Bearbeitung erhaltenen Werkstückmodells und des Baugruppenmodells erhalten wurden; und
Prüfen, ob das Baugruppenmodell in der Bearbeitungssimulation abnormal mit einem der zahlreichen Teilmodelle oder dem Werkstückmodell kollidiert,
Ausführen eines im Speicher gespeicherten Anzeigeprogramms, um auf einer Anzeigeeinrichtung den auf der Grundlage der Werkzeuginformationen abgeleiteten Empfehlungswert für die Überstandslänge in einem für einen Bediener bearbeitbaren Format sowie ein Bild anzugeben, das eine Form des Baugruppenmodells darstellt, und
als Reaktion auf eine Änderung der Überstandslänge vom Empfehlungswert zum Ausgleichswert die Form des auf der Anzeigeeinrichtung angezeigten Baugruppenmodells automatisch ändern.

10. Programm, das entweder die Bearbeitungssimulationsvorrichtung gemäß Anspruch 1 oder die Werkzeugmaschine gemäß Anspruch 8 veranlasst, das Simulationsverfahren gemäß Anspruch 9 auszuführen.

## Revendications

1. Appareil de simulation d'usinage comprenant :
une mémoire configurée pour stocker une pluralité de modèles constitutifs obtenus en modélisant respectivement au moins une partie d'éléments constituant une machine-outil, une pluralité de modèles d'unités de maintien obtenus en modélisant respectivement une pluralité d'unités de maintien d'outils, un modèle de pièce à usiner obtenu par modélisation d'une pièce avant usinage, et un programme d'usinage ; et
un processeur configuré pour
définir un modèle d'outil spécifique obtenu par modélisation d'un outil, sur la base d'informations sur l'outil,
sélectionner un modèle d'unité de maintien spécifique parmi la pluralité de modèles d'unité de maintien stockés dans la mémoire, sur la base des informations sur l'outil,
dériver une valeur de recommandation d'une longueur de saillie du modèle d'outil spécifique par rapport au modèle d'unité de maintien spécifique, en utilisant une formule de calcul prédéfinie pour calculer la valeur de recommandation de la longueur de saillie, sur la base du type d'outil TT et des données de caractéristiques d'outil TC incluses dans les informations d'outil,
créer un modèle d'assemblage dans lequel le modèle d'outil spécifique et le modèle d'unité de maintien spécifique sont utilisés en combinaison pour que la longueur de saillie soit soit la valeur de recommandation, soit une valeur de compensation qui a été compensée par rapport à la valeur de recommandation,
exécuter virtuellement le programme d'usinage en utilisant la pluralité de modèles constitutifs, le modèle de pièce à usiner et le modèle d'assemblage, et
vérifier si le modèle d'assemblage interfère anormalement avec l'un des modèles constitutifs ou le modèle de pièce à usiner,
l'appareil comprenant en outre un dispositif d'affichage, dans lequel le processeur est configuré pour exécuter un programme d'affichage stocké dans la mémoire pour afficher, sur le dispositif d'affichage, la valeur de recommandation de la longueur de saillie qui a été dérivée, sur la base des informations d'outil, dans un format qui peut être édité par un opérateur, et une image indiquant une forme du modèle d'assemblage, et
en réponse à un changement de la longueur de saillie de la valeur de recommandation à la valeur de compensation, le processeur est configuré pour changer automatiquement la forme du modèle d'assemblage affiché sur le dispositif d'affichage.

2. Appareil de simulation d'usinage selon la revendication 1, dans lequel le processeur sélectionne automatiquement le modèle d'unité de maintien spécifique parmi la pluralité de modèles d'unité de maintien stockés dans la mémoire, sur la base des informations d'outil.

3. Appareil de simulation d'usinage selon la revendication 1 ou la revendication 2, dans lequel les informations sur l'outil comprennent un type d'outil et des données de caractéristiques d'outil, et
le processeur dérive la valeur de recommandation de la longueur de saillie sur la base du type d'outil et des données de caractéristiques d'outil.

4. Appareil de simulation d'usinage selon la revendication 3, dans lequel, dans le cas où le type d'outil est un premier type d'outil de tournage, le processeur dérive la valeur de recommandation de la longueur de saillie du modèle d'outil spécifique par rapport au modèle d'unité de maintien spécifique, sur la base d'au moins un angle d'arête de coupe de l'outil de tournage.

5. Appareil de simulation d'usinage selon la revendication 3 ou la revendication 4, dans lequel, dans le cas où le type d'outil est un outil tournant, le processeur dérive la valeur de recommandation de la longueur de saillie du modèle d'outil spécifique par rapport au modèle d'unité de maintien spécifique, sur la base d'au moins un diamètre d'outil de l'outil tournant.

6. Appareil de simulation d'usinage selon l'une des revendications 3 à 5, dans lequel, dans le cas où le type d'outil est un outil de rainurage, le processeur dérive la valeur de recommandation de la longueur de saillie du modèle d'outil spécifique par rapport au modèle d'unité de maintien spécifique, sur la base d'au moins une longueur correspondant à la profondeur de rainurage de l'outil de rainurage.

7. Appareil de simulation d'usinage selon l'une des revendications 1 à 6, dans lequel, dans le cas où le modèle d'unité de maintien spécifique à sélectionner, sur la base des informations sur l'outil, comprend un modèle de support spécifique et un modèle de porte-outil spécifique, le processeur crée le modèle d'assemblage dans lequel le modèle d'outil spécifique est virtuellement maintenu par le modèle de support spécifique par l'intermédiaire du modèle de porte-outil spécifique.

8. Système de machine-outil comprenant :
l'appareil de simulation d'usinage selon l'une des revendications 1 à 7 ;
un support configuré pour supporter l'outil par l'intermédiaire d'une unité de maintien d'outil ;
un dispositif de mise en mouvement configuré pour déplacer le support ;
un dispositif de maintien de pièce à usiner configuré pour maintenir la pièce à usiner :
un deuxième processeur ;
un deuxième dispositif d'affichage ; et
une deuxième mémoire configurée pour stocker un deuxième programme d'affichage, où
le deuxième processeur exécute le deuxième programme d'affichage pour afficher, sur le deuxième dispositif d'affichage, une image d'instruction qui a été créée, sur la base des données qui ont été acquises par l'unité d'acquisition de données, et
l'image d'instruction comprend :
soit la valeur de recommandation de la longueur de saillie du modèle d'outil spécifique par rapport au modèle d'unité de maintien spécifique, soit la valeur de compensation qui a été compensée par rapport à la valeur de recommandation ; et
une image indiquant une forme du modèle d'assemblage.

9. Procédé de simulation d'usinage comprenant les étapes suivantes :
définir un modèle d'outil spécifique obtenu par modélisation d'un outil, sur la base d'informations sur l'outil qui ont été entrées soit dans un appareil de simulation d'usinage, soit dans une machine-outil ;
sélectionner un modèle d'unité de maintien spécifique parmi une pluralité de modèles d'unité de maintien stockés dans une mémoire et obtenus en modélisant respectivement une pluralité d'unités de maintien d'outils, sur la base des informations sur l'outil ;
dériver une valeur de recommandation d'une longueur de saillie du modèle d'outil spécifique par rapport au modèle d'unité de maintien spécifique, en utilisant une formule de calcul prédéfinie pour calculer la valeur de recommandation de la longueur de saillie, sur la base du type d'outil TT et des données de caractéristiques d'outil TC incluses dans les informations d'outil ;
créer un modèle d'assemblage dans lequel le modèle d'outil spécifique et le modèle d'unité de maintien spécifique sont utilisés en combinaison pour que la longueur de saillie soit soit la valeur de recommandation, soit une valeur de compensation qui a été compensée par rapport à la valeur de recommandation ;
exécuter virtuellement un programme d'usinage pour réaliser une simulation d'usinage pour usiner virtuellement un modèle de pièce à usiner, en utilisant une pluralité de modèles constitutifs obtenus en modélisant respectivement au moins une partie des éléments qui constituent la machine-outil, le modèle de pièce à usiner obtenu par modélisation d'une pièce avant usinage, et le modèle d'assemblage ; et
vérifier, dans la simulation d'usinage, si le modèle d'assemblage interfère anormalement avec l'un quelconque de la pluralité de modèles constitutifs ou le modèle de pièce à usiner,
exécuter un programme d'affichage stocké dans la mémoire pour afficher, sur un dispositif d'affichage, la valeur de recommandation de la longueur de saillie qui a été dérivée, sur la base des informations d'outil, dans un format qui peut être édité par un opérateur, et une image indiquant une forme du modèle d'assemblage, et
en réponse à un changement de la longueur de saillie de la valeur de recommandation à la valeur de compensation, changer automatiquement la forme du modèle d'assemblage affiché sur le dispositif d'affichage.

10. Programme pour amener soit l'appareil de simulation d'usinage de la revendication 1, soit la machine-outil de la revendication 8 à exécuter le procédé de simulation de la revendication 9.
